# EUROPEAN PATENT SPECIFICATION

(11) **EP 3 250 989 B1**
(45) Date of publication and mention of the grant of the patent: **08.09.2021**
(21) Application number: 16743860.5
(22) Date of filing: 19.01.2016
(51) Int. Cl.: G06F 3/042, G06F 3/0488, G06F 1/16, B60R 25/00, G06F 3/01, G06F 3/041

(54) **OPTICAL PROXIMITY SENSOR AND ASSOCIATED USER INTERFACE**
OPTISCHER NÄHERUNGSSENSOR UND ZUGEHÖRIGE BENUTZERSCHNITTSTELLE
CAPTEUR DE PROXIMITÉ OPTIQUE ET INTERFACE UTILISATEUR ASSOCIÉE

(30) Priority: 26.01.2015 US 201562107536 P; 28.07.2015 US 201562197813 P; 11.12.2015 US 201562266011 P
(43) Date of publication of application: 06.12.2017
(73) Proprietor: Neonode Inc., San Jose CA 95134 (US)
(72) Inventor: ERIKSSON, Thomas, 114 32 Stockholm (SE); JUBNER, Alexander, Spånga 163 46 (SE); TEYMOURZADEH, Rozita, 194 36 Upplands Vasby (SE); ANDERSSON, Hakan Sven Erik, 112 32 Stockholm (SE); ROSENGREN, Per, Täby 187 73 (SE); WANG, Xiatao, Lidingö 18130 (SE); HOLMGREN, Stefan, 192 77 Sollentuna (SE); FROJDH, Gunnar Martin, 137 71 Dalaro (SE); FELLIN, Simon, Floda 44834 (SE); HARTMAN, Jan Tomas, 692 72 Kumla (SE); SVERUD, Oscar, 174 46 Sundbyberg (SE); KIM, Sangtaek, Walnut Creek, California 94596 (US); DAHL-ORN, Rasmus, 412 52 Goteborg (SE); BERGLIND, Richard, 125 58 Alvsjo (SE); NORDSTROM, Karl Erik Patrik, 141 41 Huddinge (SE); SPARF, Lars, 162 45 Vallingby (SE); ROSENGREN, Erik, Stockholm 117 33 (SE); KARLSSON, John, 195 32 Marsta (SE); BEHDASHT, Remo, Lane Cove, New South Wales 2066 (AU); AMAN, Robin Kjell, 163 41 Spanga (SE); SHAIN, Joseph, 7630835 Rehovot (IL); HAGBERG, Oskar, 431 46 Molndal (SE); ROZADA, Joel, 411 34 Goteborg (SE)
(74) Representative: Lavoix
(86) International application number: PCT/US2016/013927
(87) International publication number: WO 2016/122927

(56) References cited:
- WO-A2-2014/194151
- WO-A2-2014/194151
- DE-U1-202014 104 143
- US-A1- 2002 075 243
- US-A1- 2005 024 623
- US-A1- 2014 104 160
- US-A1- 2014 320 459

## Description

### CROSS REFERENCES TO RELATED APPLICATIONS

This application claims priority benefit from:
- U.S. Provisional Application No. 62/107,536 entitled OPTICAL PROXIMITY SENSORS and filed on January 26, 2015 by inventors Stefan Holmgren, Oscar Sverud, Sairam Iyer, Richard Berglind, Karl Erik Patrik Nordström, Lars Sparf, Per Rosengren, Erik Rosengren, John Karlsson, Thomas Eriksson, Alexander Jubner, Remo Behdasht, Simon Fellin, Robin Kjell Åman and Joseph Shain;
- U.S. Provisional Application No. 62/197,813 entitled OPTICAL PROXIMITY SENSOR and filed on July 28, 2015 by inventors Rozita Teymourzadeh, Håkan Sven Erik Andersson, Per Rosengren, Xiatao Wang, Stefan Holmgren, Gunnar Martin Fröjdh and Simon Fellin; and
- U.S. Provisional Application No. 62/266,011 entitled OPTICAL PROXIMITY SENSOR and filed on December 11, 2015 by inventors Thomas Eriksson, Alexander Jubner, Rozita Teymourzadeh, Hakan Sven Erik Andersson, Per Rosengren, Xiatao Wang, Stefan Holmgren, Gunnar Martin Fröjdh, Simon Fellin and Jan Tomas Hartman.

### FIELD OF THE INVENTION

The field of the present invention is light-based touchscreens and proximity sensors and applications therefor, including door lock systems that utilize gestures to lock and unlock the door, a proximity sensor bar that is magnetically attached to a laptop display for enabling touch input on a display that does not detect touch gestures, user interfaces for in-vehicle infotainment systems, and user interfaces for PCs.

### BACKGROUND OF THE INVENTION

In the prior art, a one-dimensional array of proximity sensors is not accurate enough to determine a two-dimensional location of a pointer within a two dimensional plane extending from the array.

In prior art door lock systems, a portable wireless transmitter held by a person sends a coded signal to a wireless receiver connected to a door lock mechanism to lock or unlock the door. Some prior art transmitter units include switches for activating the lock and unlock functions, whereas other transmitter units are in the form of an electronic transponder card, whereby a transmitter unit connected to the lock interrogates the transponder when a wake up signal is detected.

In order to provide an added level of security, some systems require the user to enter a predefined authentication gesture to confirm that an authorized person is trying to unlock the door of a vehicle. Thus, for example, when the user presses a switch on a key fob transmitter, that user must enter a predefined authentication gesture on a touch sensor in order to unlock the door. In another example, a detected predefined authentication gesture activates a transmitter unit to interrogate a hands-free card transponder.

Laptop computers are typically available in touchscreen and non-touchscreen versions. It would be advantageous to enable consumers of non-touchscreen laptops to enable touchscreen functionality when desired. For example, it would be advantageous to enable swipe, pinch and rotate gestures when browsing images, checking a newsfeed or rotating images. Another example is to enable touchscreen functionality during travel in an airplane where it is more comfortable to use one's fingers on the screen than using the laptop's built-in trackpad.

Many in-vehicle infotainment systems employ touchscreen user interfaces designed for handheld devices, such as mobile phones. It would be advantageous to provide a user interface that is designed for the use case of a display that is not held in the user's hand. It would be additionally advantageous to provide user interfaces for electronic devices, including handheld devices, desktop devices and in-vehicle devices that provide different schemes concurrently for accessing functions.

WO 2014/194151 A1 describes a proximity sensor featuring a plurality of light pulse emitters for projecting light along a detection plane, a plurality of light detectors for detecting reflections of the light projected by the emitters by a reflective object in the detection plane, a plurality of lenses oriented relative to the emitters and detectors in such a manner that for each emitter-detector pair, light emitted by the emitter of that pair passes through one of the lenses and is reflected by the object back through one of the lenses to the detector of that pair when the object is located at a position, from among a set of positions in the detection plane, that position being associated with that emitter-detector pair. A processor co-activating emitter-detector pairs is configured to calculate a location of the object in the detection plane based on the detector outputs.

U.S. Publication No. 2014/320459 A1 describes calculating touch coordinates and an area of each touch location. A touch sensitive area is parsed into a two-dimensional (2-D) pixel or cell grid. In addition, a table is generated storing a list of pixels or cells traversed by each active detection beam, and each beam is marked as either blocked or unblocked. Each pixel in the 2-D cell grid receives a binary value (blocked = 1 / not blocked = 0), whereby cells are marked as untouched or touched. The area of a touch location is the sum of its pixels and the touch position is the center of gravity of the area.

U.S. Publication No. 2002/075243 A1 describes emitters and detectors positioned in proximity to a display screen, where the emitters emit energy beams that are diverged across the surface of the display screen and the detectors receive energy beams over a range of angles and generate detection signals upon detecting energy beams. Detection maps are generated based on detection signals. Detection maps indicate which detector should receive an energy beam from which emitter at any point in time. Detections maps are compared to determine that energy beams have been interrupted by a touch. Based on the interrupted energy beams, the location of the touch on the display screen may be determined.

German Publication No. DE 20 2014 104143 U1 describes detection of a touch screen device featuring a frame, a first leg, a second leg, a third leg and a fourth leg, and at least one printed circuit board which is disposed at a side of frame and on which a plurality of transmitters, a plurality of receivers and a wireless transmission unit are arranged.

### SUMMARY

Robot measurements indicate that there is a pattern in the relative signal strengths that repeat within triangles spanned by three adjacent signals. The robot measurement is used to learn that pattern, so that a mapping is made from the relative signal strengths of three signals in a triangle, to the reflection location and strength of an obstacle within that triangle. Adjacent triangles give individual detection candidates, which are consolidated into one.

There is thus provided in accordance with an embodiment of the present invention a proximity sensor according to claim 1 and a method according to claim 10. The dependent claims set out particular embodiments of the invention.

There is yet further provided in accordance with an embodiment of the present invention a door lock system that enters an activatable state, whereby the lock is activated in response to detecting a first non-predefined gesture, and the lock is subsequently activated to unlock in response to that same gesture being detected again.

There is moreover provided in accordance with an embodiment of the present invention a proximity sensor array in an elongated housing that is attached by a user to an edge of a laptop computer screen to provide touchscreen detection to the laptop. In some embodiments a Universal Serial Bus (USB) connector extends from the elongated housing and is inserted into a USB socket in the laptop, enabling the proximity sensor to communicate with the laptop using USB communications protocols and also enabling the proximity sensor to receive electric current from the laptop. In some embodiments, the proximity sensor communicates with the laptop wirelessly; e.g., using a short range wireless connectivity standard. In some embodiments the elongated housing includes one or more magnetic fasteners for attaching the proximity sensor array along an edge, e.g., the bottom edge, of the laptop screen.

Embodiments of the present invention provide two-dimensional (2-D) touch detection using a one-dimensional array of alternating light emitters and detectors. The present invention also provides a three-dimensional (3-D) touch or hover detector based on the same principles as the 2-D detectors.

There is additionally provided in accordance with an embodiment of the present invention a GUI for an in-vehicle infotainment system, providing both context-driven navigation of the GUI and hierarchical menu-driven navigation thereof, within a single display simultaneously.

### BRIEF DESCRIPTION OF THE DRAWINGS

The present invention will be more fully understood and appreciated from the following detailed description, taken in conjunction with the drawings in which:
**FIG. 1** is a simplified illustration of light emitted from light sources along the solid lines, and reflected along the dashed lines to light sensors, in accordance with an embodiment of the present invention;
**FIG. 2** is an illustration of backward and forward hotspot signal values, in accordance with an embodiment of the present invention;
**FIG. 3** is an illustration of the signal value relationship between top-middle and center hotspots, in accordance with an embodiment of the present invention;
**FIG. 4** is an illustration of the signal value relationship between right-middle and center hotspots, in accordance with an embodiment of the present invention;
**FIG. 5** is an illustration of the signal value relationship between top-right and center backward hotspots, and top-middle and right-middle forward hotspots, in accordance with an embodiment of the present invention;
**FIG. 6** is an illustration showing that the relationship between two signal values *v0* and *v1* (solid lines) is expressed as *r* = *log(v1)* - *log(v0)* (dashed line), in accordance with an embodiment of the present invention;
**FIG. 7** is an illustration using triangles to mark areas in which all spanning hotspot signal values are relatively strong, in accordance with an embodiment of the present invention;
**FIG. 8** is an illustration showing detection errors across a 100 x 64 mm touchscreen, in accordance with an embodiment of the present invention;
**FIG. 9** is an illustration showing a 2-D histogram of sample error vectors, in accordance with an embodiment of the present invention;
**FIGS. 10** - **13** are simplified illustrations of a proximity sensor, in accordance with an embodiment of the present invention;
**FIGS. 14** and **15** are simplified illustrations of calibration tools for the proximity sensor of **FIGS. 10** - **13****,** in accordance with an embodiment of the present invention;
**FIGS. 16** and **17** are simplified illustrations showing how the calibration tool of **FIG. 15** identifies how the emitters and detectors of the proximity sensor have been mounted therein, in accordance with an embodiment of the present invention;
**FIG. 18** is a simplified illustration of a proximity sensor detecting a proximal object, in accordance with an embodiment of the present invention;
**FIG. 19** is a simplified illustration of a two-dimensional image of detection values, in accordance with an embodiment of the present invention;
**FIGS. 20** and **21** are simplified illustrations of a detected reflection value for an emitter-receiver pair that is not associated with that pair's hotspot location, in accordance with an embodiment of the present invention;
**FIG. 22** is a simplified illustration of a detected partial circumference of an object in a two-dimensional image of detection values, in accordance with an embodiment of the present invention;
**FIG. 23** is a simplified illustration of a method of estimating a partial circumference of an object, in accordance with an embodiment of the present invention;
**FIG. 24** is an illustration of a saddle roof or hyperbolic paraboloid corresponding to the emitter light paths and reflected light paths of a 3-D proximity sensor, in accordance with an embodiment of the present invention;
**FIG. 25** is a simplified illustration of a circular arrangement of six emitters and six receivers arranged alternatingly along a circular base that provide 30 hotpot locations along a 3-D hyperboloid, in accordance with an embodiment of the present invention;
**FIG. 26** is a simplified illustration of a grid representing emitted and reflected light beams from a circular arrangement of 16 emitters and 16 receivers arranged alternatingly along the circle, which provide 176 hotpot locations along a 3-D hyperboloid, in accordance with an embodiment of the present invention;
**FIG. 27** is a simplified flowchart of a method of locking and unlocking a door, in accordance with an embodiment of the present invention;
**FIG. 28** is a simplified illustration of a car that practices the lock-and-unlock method of **FIG. 27****,** in accordance with an embodiment of the present invention;
**FIG. 29** is a simplified illustration of the interior of the car of **FIG. 28****,** in accordance with an embodiment of the present invention;
**FIGS. 30** and **31** are simplified illustrations of a proximity sensor bar configured as a laptop accessory, in accordance with an embodiment of the present invention;
**FIGS. 32** - **36** are simplified illustrations of the laptop accessory of **FIGS. 30** and **31** placed along an edge of a laptop display, in accordance with an embodiment of the present invention;
**FIG. 37** is a simplified illustration of the laptop accessory of **FIGS. 30** and **31** situated along an edge of a laptop display and rotated away from the display to provide a detection plane in the airspace between the display and the keyboard, in accordance with an embodiment of the present invention;
**FIG. 38** is a simplified illustration of the laptop accessory of **FIGS. 30** and **31** situated along an edge of a laptop display and rotated away from the display to provide a detection plane along the surface of the laptop keyboard, in accordance with an embodiment of the present invention;
**FIG. 39** is a simplified flow chart of a process for assembling a proximity sensor, in accordance with an embodiment of the present invention;
**FIG. 40** is a simplified illustration of a proximity sensor being assembled according to the process of **FIG. 39****;**
**FIGS. 41** and **42** are simplified illustrations of light beams of a proximity sensor detecting an object, in accordance with an embodiment of the present invention;
**FIG. 43** is a simplified illustration of a side view of a proximity sensor and light beams projected therefrom, in accordance with an embodiment of the present invention;
**FIG. 44** is a simplified illustration of a proximity sensor lens and associated optical components viewed from above and light beams projected through that lens, in accordance with an embodiment of the present invention;
**FIG. 45** is a simplified illustration of a side view of the lens and components of **FIG. 44** and light beams projected through that lens, in accordance with an embodiment of the present invention;
**FIG. 46** is a simplified illustration of an L-shaped optical proximity sensor situated at a corner of a screen, in accordance with an embodiment of the present invention;
**FIG. 47** is a simplified flow diagram of a method of identifying a gesture, in accordance with an embodiment of the present invention;
**FIG. 48** is a simplified illustration of a user interface, in accordance with an embodiment of the present invention;
**FIG. 49** is a simplified illustration of an optical proximity sensor situated along a short segment of a display edge for adjusting display parameters, in accordance with an embodiment of the present invention;
**FIGS. 50****,** **53****,** **54** and **57** are flow charts for an in-vehicle infotainment system GUI, in accordance with an embodiment of the present invention;
**FIGS. 51****,** **55****,** **56** and **58** are screenshots of the in-vehicle infotainment system GUI of **FIGS. 50****,** **53****,** **54** and **57****,** in accordance with an embodiment of the present invention; and
**FIG. 52** is an illustration of a notification card used in the in-vehicle infotainment system GUI of **FIGS. 50****,** **51** and **53** - **58****,** in accordance with an embodiment of the present invention.

The following table catalogs the numbered elements and lists the figures in which each numbered element appears. Similarly numbered elements represent elements of the same type, but they need not be identical elements.

| **Numbered Elements** | | |
|---|---|---|
| | | |
| **Element** | **Description** | **Figures** |
| **101 - 116** | emitter | **10 - 18, 20, 21, 23, 25, 40 - 45** |
| **201 - 211** | photodetector | **10 - 18, 20, 21, 23, 25, 41, 42, 45** |
| **301 - 304** | lens | **10 - 15, 17, 18, 20, 21** |
| **310 - 316** | lens | **31, 36, 40** |
| **321 - 327** | lens | **41 - 45** |
| **401, 404** | emitted light beam | **10 - 18, 20, 21, 25** |
| **402, 403, 405, 406** | reflected light beam | **10 - 12, 14 - 18, 20, 21, 25** |
| **410** | proximity sensor light beams | **25** |
| **411 - 414** | proximity sensor light beams | **41 - 45** |
| **501** | proximity sensor bar | **10 - 18, 20, 21, 23, 28** |
| **502** | motion sensor | **26** |
| **503** | portable transponder | **26** |
| **504** | transmitter unit | **26** |
| **510** | proximity sensor bar | **30 - 38** |
| **511** | housing | **31** |
| **512** | PCB | **40** |
| **519, 520** | proximity sensor | **46, 48, 49** |
| **601, 602** | arrow | **14,15** |
| **701** | processor | **10 - 18, 20, 21, 23** |
| **801, 802** | object | **10 - 13, 18, 20, 21, 23** |
| **803** | motor | **14,15** |
| **804, 805** | shaft | **14,15** |
| **806, 807** | reflective object | **14 - 17** |
| **810** | car | **28** |
| **811** | car door | **28, 29** |
| **812** | driver-side window | **28, 29** |
| **813** | glove compartment | **29** |
| **815,816** | seat | **29** |
| **820** | keyless entry system door lock | **29** |
| **830** | laptop | **30, 32** |
| **831** | display screen | **30 - 38, 46, 48, 49** |
| **832** | keyboard | **30 - 38** |
| **833** | USB connector | **30 - 34, 36** |
| **900 - 902** | card menu item | **52, 55** |
| **903** | menu bar | **55, 56, 58** |
| **904 - 908** | menu bar item | **55, 56, 58** |

| **Numbered Elements (continued)** | | |
|---|---|---|
| | | |
| **Element** | **Description** | **Figures** |
| **910 - 916, 916", 919, 919', 926, 926",929, 929', 936, 936", 939, 939', 940 - 942, 944, 945, 961 - 969** | hotspot location | **2 - 5, 10 - 13, 16 - 18, 20 - 23** |
| **971, 972** | detection plane | **46, 48, 49** |
| **973** | touch-sensitive portion of screen | **49** |
| **974** | non--touch-sensitive portion of screen | **49** |
| **975 - 977** | icon | **48** |
| **978 - 980** | list item | **56, 58** |
| **981, 982** | touch-sensitive controls | **49** |
| **983** | touch location | **49** |
| **984** | scroll knob | **49** |
| **985** | notification card | **51, 58** |
| **986 - 988** | application card | **51, 55, 56, 58** |
| **989** | partial object circumference | **22** |
| **990** | detection image | **19, 22** |
| **991 - 995** | ring of six hotspot locations in a hyperboloid | **25** |
| **996** | sub-menu bar | **56, 58** |
| **997 - 999** | sub-menu bar item | **56, 58** |
| **1001 - 1011** | flowchart step | **27,40** |
| **1020 - 1087** | user interface action | **50, 53, 54, 57** |

### DETAILED DESCRIPTION

Throughout this description, the terms *"source"* and *"emitter"* are used to indicate the same light emitting elements, inter alia LEDs, VCSELs and lasers, and the terms *"sensor"* and *"detector"* are used to indicate the same light detecting elements, inter alia photodiodes.

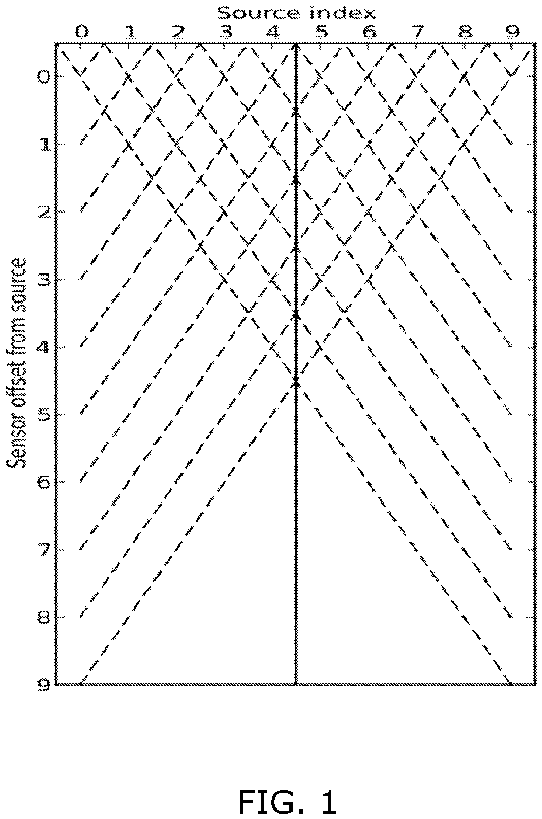

Reference is made to **FIG. 1****,** which is a simplified illustration of light emitted from light sources along the solid lines, and reflected along the dashed lines to light sensors, in accordance with an embodiment of the present invention. **FIG. 1** shows how light is emitted straight out from sources in collimated beams. Light that hits an obstacle is reflected diffusely. Sensors detect incoming light from reflections in two narrow corridors that reach out from the sensor in two fixed directions - both at the same angle away from opposite sides of the light beams, but on opposite sides of each beam, e.g., 30° and -30° from the emitter beam.

The amount of light that travels from one source to a sensor depends on how centered the obstacle is on the source's beam, and how centered it is on one of the sensor's corridors. Such a source/sensor pair is referred to as a *"hotspot".* The obstacle location that gives the highest amount of light for a hotspot is referred to as the *"hotspot location"* or the *"target position"* for that source/sensor pair. A proximity sensor according to the present invention measures the transmitted amount of light for each hotspot, and each such measurement is referred to as a *"hotspot signal value".* The measurement normalizes all hotspot signal values so as to have the same range.

Since light that hits an obstacle is reflected diffusely and reflections are maximally detected in two narrow corridors at opposite sides of the light beams, the present specification refers to a forward direction detection based on all of the narrow detection corridors in a first direction, and a backward direction detection based on all of the narrow detection corridors in the second direction. Stated differently, the forward direction includes all detections of emitter-detector pairs in which the detector of the pair has a higher location index than the emitter of the pair, and the backward direction includes all detections of emitter-detector pairs in which the detector of the pair has a lower location index than the emitter of the pair. The forward direction may be left or right, depending on device orientation. A hotspot where the sensor looks in the backward direction is referred to as a *"backward hotspot",* and vice versa for those looking forward.

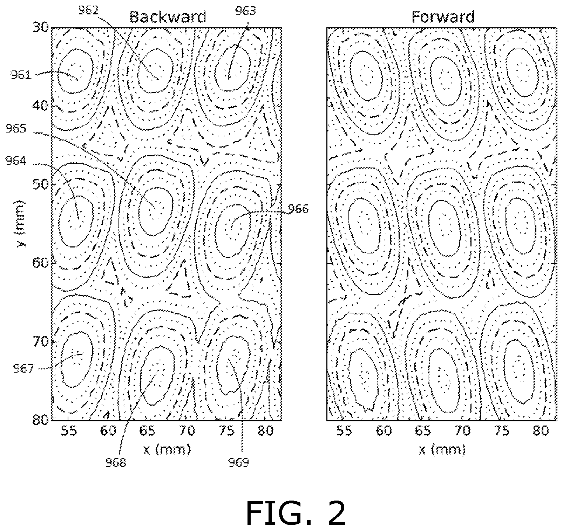

Reference is made to **FIG. 2****,** which is an illustration of backward and forward hotspot signal values, i.e., signal values for emitter-detector pairs, in accordance with an embodiment of the present invention. Hotspot signal values are sampled with an obstacle placed at locations in a dense grid spanning all hotspot locations; i.e., all locations at which an object can be placed such that the emitter-detector pairs will detect a reflection value. **FIG. 2** shows the maximum of all hotspot signal values at obstacle locations within a region that spans 3x3 hotspot locations, or target positions, separately for backward and forward hotspots. In **FIGS. 2 - 5** hotspot locations are indicated as numbered elements **961** - **969** only in the illustrations of backward hotspot signal values. In **FIGS. 2 - 5** the hotspot locations in the illustrations of forward hotspot signal values are not indicated as numbered elements in order to avoid cluttering the figure.

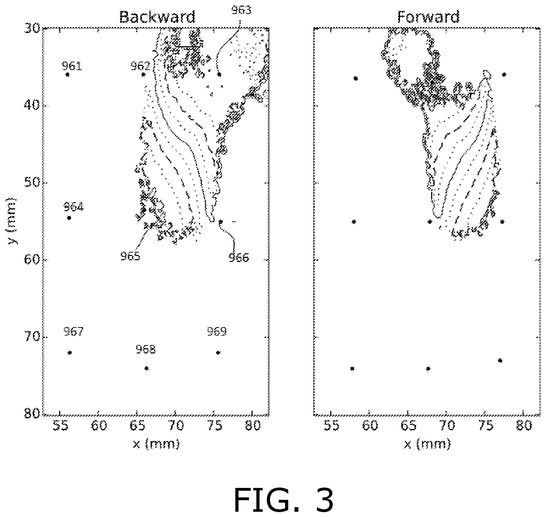

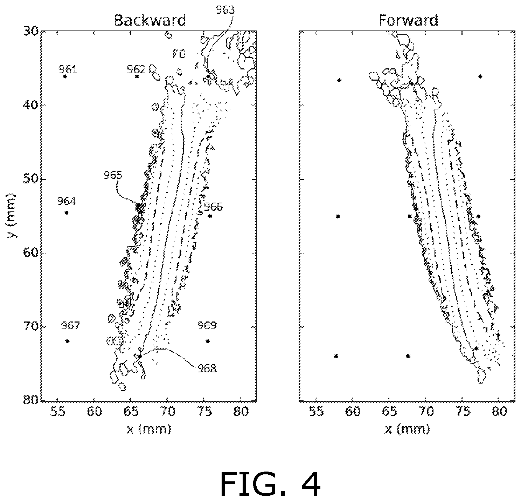

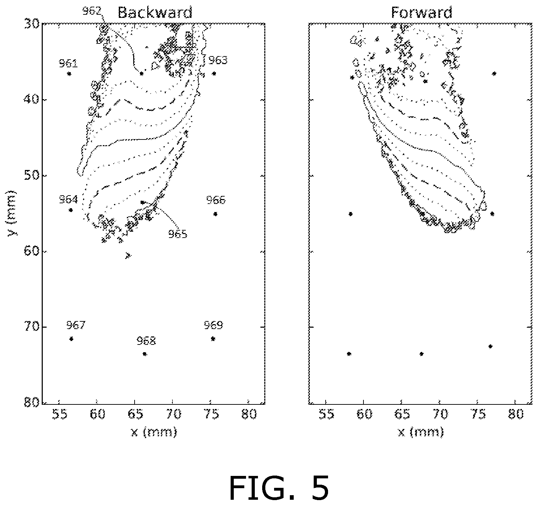

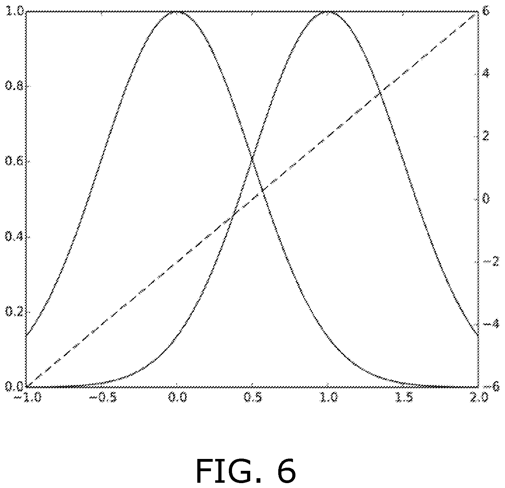

Reference is made to **FIG. 3****,** which is an illustration of the signal value relationship between top-middle and center hotspots within a 3×3 grid of forward hotspots, i.e., hotspots at locations (2,1) and (2,2) in the 3x3 grid, in accordance with an embodiment of the present invention. Reference is also made to **FIG. 4****,** which is an illustration of the signal value relationship between right-middle and center hotspots within a 3×3 grid of forward hotspots, i.e., hotspots at locations (3,2) and (2,2) in the 3x3 grid, in accordance with an embodiment of the present invention. Reference is also made to **FIG. 5****,** which is an illustration of the signal value relationship between top-right and center backward hotspots, and top-middle and right-middle forward hotspots, each within a 3×3 grid of hotspots, in accordance with an embodiment of the present invention. **FIGS. 3 - 5** show relationships between two adjacent hotspot signal values. Each curve follows a fixed relationship value, similar to a topological map. Reference is also made to **FIG. 6****,** which is an illustration showing that the relationship between two signal values *v0* and *v1* (solid lines) is expressed as a difference of logarithms of the values (dashed line), in accordance with an embodiment of the present invention. **FIG. 6** shows the relationship expressed as *r* = *log(v1)* - *log(v0).* This relationship is drowned in noise when either of the signal values has a low signal-to-noise (SNR) ratio.

The signal value relationship between two vertically adjacent hotspots corresponds to a curve in **FIG. 3****.** If the signal values are assumed to be normally distributed with a certain standard deviation, then that assumption may be used to find an interpolated location between the hotspot locations according to **FIG. 6****,** referred to as a *"crossing".* It does the same for two vertically adjacent hotspots next to and at either side of the first, to create a second crossing. The rationale is that the obstacle location is somewhere between the two crossings. If the curves in **FIG. 3** are all straight and parallel, this would be accurate. However, curvature causes inaccuracy.

To account for such curvature, the location between the crossing is found using the same method, but from the relationships of horizontally adjacent hotspots. The curves are now those in **FIG. 4****.** Instead of finding horizontal crossings and selecting the location between both pairs of crossings, a shortcut is used. The vertical crossings are thought of as virtual hotspots, and each signal value is estimated based on the real hotspot signal values and the relative distance to each. The signal value relationship of the crossing's virtual hotspots gives the obstacle location directly.

Since the hotspot signal values for all obstacle locations have been recorded by a robot, finding a new obstacle location is achieved by finding the sample whose signals match those caused by the obstacle. This may not be efficient, though, due to high memory and high time complexity. Comparing the relationship between the highest signal values and those of adjacent hotspots should be sufficient.

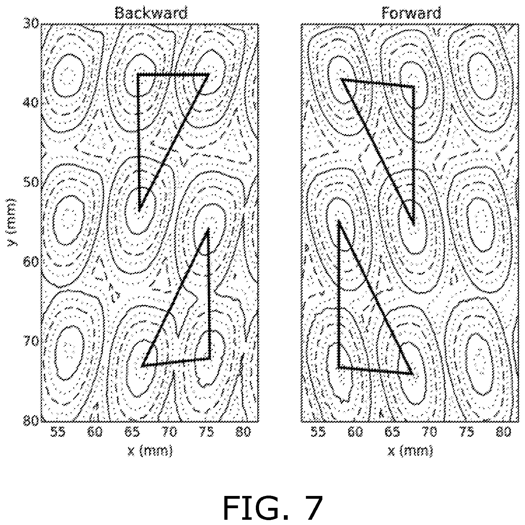

Reference is made to **FIG. 7****,** which is an illustration using triangles to mark areas in which all spanning hotspot signal values are relatively strong, in accordance with an embodiment of the present invention. The mapping from two-dimensional signal relationships to three-dimensional location and reflectivity is similar in all triangles; especially so in triangles of the same orientation in the same horizontal band. This means that the mapping needs to be learned and stored for only a few triangle groups. It may be observed in **FIG. 2** that there are triangular areas spanned by three hotspots, in which those three hotspot signal values are all relatively high. Some of these are drawn in **FIG. 7****.** This means that the three pairwise relationships between those signals will be above noise within the area. Out of those three relationships one is redundant, since it is derivable from the other two. Within such a triangle, two signal relationships map to a location within that triangle. It also maps to the reflectivity of the obstacle relative to the observed hotspot signal values. These triangular areas cover the whole screen, so the location and reflectivity of an obstacle is found by finding the triangle that is spanned by the hotspots with the highest signal values, and mapping the signal relationships to location and reflectivity.

The mapping transform takes the vertical **(****FIG. 3****)** and diagonal **(****FIG. 5****)** signal relationships as input. The input 2-D space, from minimum to maximum observed in each dimension, is covered by a 9x9 grid of nodes. Each node contains a location expressed in a frame of reference spanned by the triangle's edges. The location may be slightly outside of the triangle. It also contains a compensation factor that, when multiplied with the highest signal value, gives the reflectivity of the obstacle. The four nodes closest to the input are interpolated with bi-linear interpolation.

All hotspots that have a signal value above a certain threshold, and that are stronger than all its eight neighbors, are evaluated for possible detections. All six triangles that use the maximum hotspot are screened as possible contributors to the detection. Each triangle is given a weight that is calculated as the product of all its hotspot signal values. The highest three are kept, and their weights are reduced by that of the fourth highest. The kept triangles are evaluated, and their results are consolidated to a weighted average, using the weights used for screening.

Finding strong signals around which to evaluate triangles, and tracking, may be performed as described in applicant's U.S. Patent Application No. 14/312,787, now U.S. Patent No. 9,164,625, entitled OPTICAL PROXIMITY SENSORS and filed on June 24, 2014.

Using a robot to place a stylus at known locations opposite the sensor and recording the resulting detection signals, enables quantifying accuracy of the algorithm. The recorded sample signal values are sent as input to the algorithm in random order, and the calculated detection locations based on these inputs are compared to the actual sample locations.

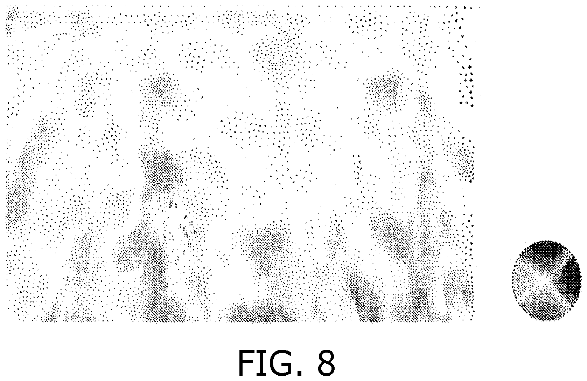

Reference is made to **FIG. 8****,** which is an illustration showing detection error across a 100 x 64 mm touch screen, in accordance with an embodiment of the present invention. The 2-D error vector is color coded according to the legend at the right in **FIG. 8****.** The legend circle radius is 5 mm. **FIG. 8** shows how large, and in what direction, the error is for samples across the screen.

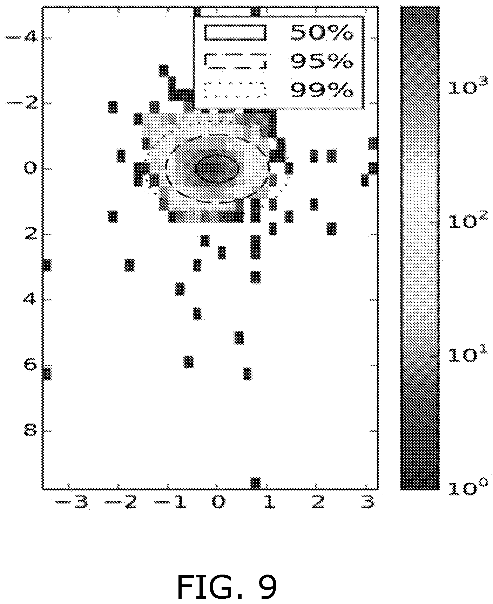

Reference is made to **FIG. 9****,** which is an illustration showing a 2-D histogram of sample error vectors, in accordance with an embodiment of the present invention. The units of the axes are mm. **FIG. 9** shows the distribution of the errors. **TABLE I** below provides the quantified accuracy values.

| **Measurement**idem | **Value** |
|---|---|
| Error distances 50:th percentile | 0.43 mm |
| Error distances 95:th percentile | 1.04 mm |
| Error distances 99:th percentile | 1.47 mm |
| True positives | 100.0% |
| False positives | 0.0% |

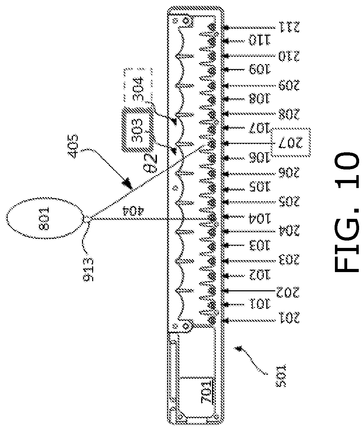

Reference is made to **FIGS. 10** - **13****,** which are simplified illustrations of a proximity sensor, in accordance with an embodiment of the present invention. **FIGS. 10** - **13** show a proximity sensor **501,** according to the teachings of the present invention. Proximity sensor **501** includes light sources **101** - **110** and light sensors **201** - **211,** each light source being situated between two of the sensors. Proximity sensor **501** also includes a plurality of lenses, such as lenses **301 - 304,** each lens being positioned in relation to two respective neighboring ones of the sensors such that light entering that lens is maximally detected at a first of the two sensors when the light enters that lens at an acute angle of incidence *θ1,* and light entering that lens is maximally detected at the other of the two sensors when the light enters that lens at an obtuse angle of incidence *θ2*. The lens is positioned in relation to the light source situated between these two sensors such that the light from the light source is collimated as it exits proximity sensor **501.** This arrangement provides the two narrow corridors that extend from each sensor in two fixed directions away from opposite sides of the projected light beams discussed above with respect to **FIG. 1****.**

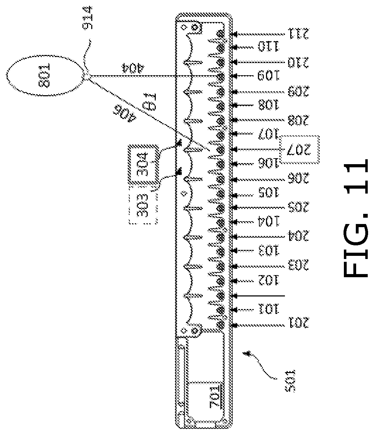

**FIG. 10** shows a forward reflection path of maximum detection for hotspot **913** generated by source/sensor pair **104/207,** whereby light from source **104** reflected off object **801** is maximally detected by sensor **207,** and **FIG. 11** shows a backward reflection path of maximum detection for hotspot **914** generated by source/sensor pair **109/207,** whereby light from source **109** reflected off object **801** is maximally detected by sensor **207.** **FIGS. 10** and **11** show how sensor **207** is situated with respect to neighboring lenses **303** and **304** such that sensor **207** receives maximum forward reflection values via lens **303,** and maximum backward reflection values via lens **304.**

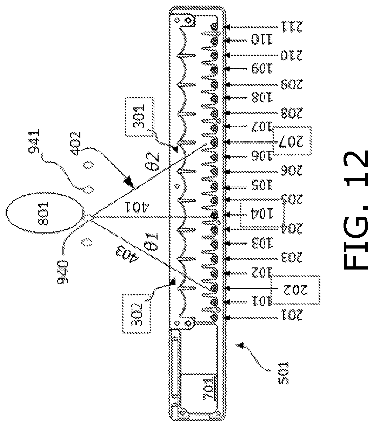

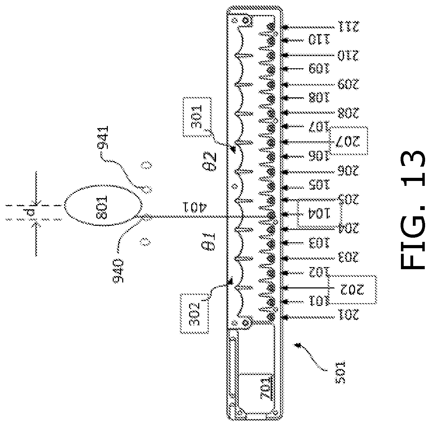

As explained above with respect to **FIG. 1****,** the intersections outside proximity sensor **501** between the projected light beams and the corridors of maximum detection provide a map of hotspots. Four hotspots are illustrated in **FIGS. 12** and **13****,** two of which are numbed **940** and **941.** An object **801** is shown nearest hotspot **940** in **FIG. 12****.** Thus, the maximum detection of object **801** is generated by source/sensor pairs **104/202** and **104/207.** Source/sensor pair **104/202** provides backward detection, and source/sensor pair **104/207** provides forward detection, as discussed above. Additional detections are generated by other source/sensor pairs, e.g., forward detection source/sensor pair **105/208,** because light beams from source **105** are scattered, and a portion thereof arrives at sensor **208,** but the amount of light detected at sensor **208** is significantly less than that generated by source/sensor pair **104/207,** because the scattered light arriving at sensor **208** does not travel on the corridor of maximum detection.

**FIG. 13** shows proximity sensor **501** of **FIG. 12****,** but object **801** is moved a distance d to the right. In this case similar amounts of detection will be generated by forward source/sensor pairs **104/207** and **105/208.** Each of these detections will be less than the detection generated by source/sensor pair **104/207** in **FIG. 12** and greater than the detection generated by source/sensor pair **105/208** in **FIG. 12****,** as explained above with reference to **FIGS. 3** - **7**. The location of object **801** between hotspots **940** and **941** is calculated by interpolating the amounts of light detected by source/sensor pairs **104/207** and **105/208.** As discussed above with reference to **FIG. 7****,** a location of object **801** is calculated by performing at least two interpolations between amounts of light detected by source/sensor pairs that correspond to three neighboring hotspots, the neighboring hotspots being the vertices of a triangle in the detection space.

In order to determine how to interpolate the detected amounts of light, detection sensitivities are calculated in the vicinities of the hotspots using a calibration tool that places a calibrating object having known reflective properties at known locations in the detection zone outside proximity sensor **501.** At each known location, a plurality of source/sensor pairs is synchronously activated and amounts of light detected by neighboring activated sensors are measured. Repetitive patterns in relative amounts of light detected by the neighboring activated sensors as the object moves among the known location are identified. These patterns are used to formulate detection sensitivities of proximity sensor **501** in the vicinities of the hotspots which are used to determine how to interpolate the amounts of light detected in order to calculate the location of a proximal object.

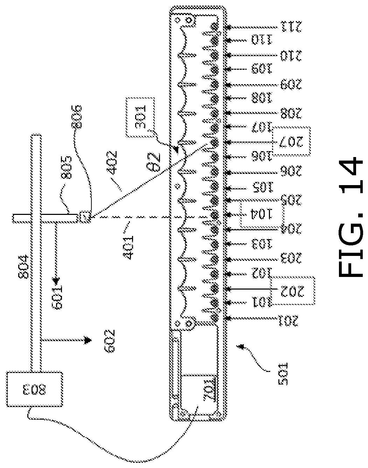

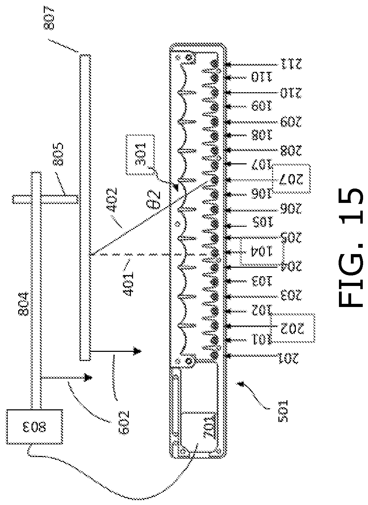

Reference is made to **FIGS. 14** and **15****,** which are simplified illustrations of calibration tools for the proximity sensor of **FIGS. 10** - **13****,** in accordance with an embodiment of the present invention. **FIG. 14** shows a first calibration tool that includes motor **803,** and shafts **804** and **805** that move reflective calibration object **806** horizontally and vertically in relation to proximity sensor bar **501,** as indicated by arrows **601** and **602.** At each location at which object **806** is placed, a plurality of source/sensor pairs that correspond to hotspots in the vicinity of that location are activated and the amounts of light detected are used to determine the sensitivity in the vicinity of those hotspots. Multiple such source/sensor pairs that share a common light source are activated simultaneously.

In some embodiments, the calibration tool, either that illustrated in **FIG. 14** or that illustrated in **FIG. 15****,** is used on certain representative units of proximity sensor **501,** and the interpolation methods derived therefrom are applied to other similar units. In other embodiments however, either calibration tool is used on each unit of proximity sensor **501,** in order to provide interpolations tailored to each individual proximity sensor.

**FIG. 15** shows a second calibration tool that differs from that of **FIG. 14** in the size and shape of the reflective calibration object. In **FIG. 14** calibration object **806** is modeled as a finger or stylus typically used with proximity sensor bar **501,** whereas in **FIG. 15** calibration object **807** is a rod that spans the length of proximity sensor bar **501.** The rod is covered in a material having reflective properties similar to those of skin or of a stylus typically used with proximity sensor bar **501.** In the calibration tool of **FIG. 15****,** shaft **805** remains at a fixed location on shaft **804,** such that object **807** only moves toward and away from proximity sensor bar **501,** as indicated by arrows **602.** In this case, at each location of object **807** the light sources are activated one after the other and, during each light source activation, any of the light sensors **201** - **211** that may reasonably be expected to detect a significant reflection therefrom are activated. In some embodiments, all of the light sensors **201** - **211** are simultaneously activated with each light source activation.

In addition to determining interpolation methods, the calibration tools are used to map the locations of the hotspots that correspond to the source/sensor pairs. Often the locations of the hotspots are shifted from their expected locations due to mechanical issues such as imprecise placement or alignment of a light source or light detector within proximity sensor **501.** When used to this end, numerous proximity sensor units need to be calibrated and the calibration tool of **FIG. 15** is more efficient than that of **FIG. 14****.**

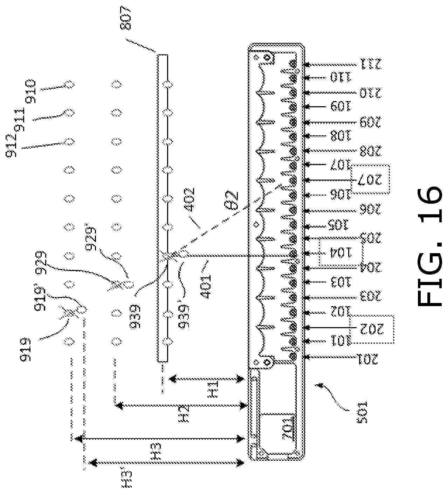

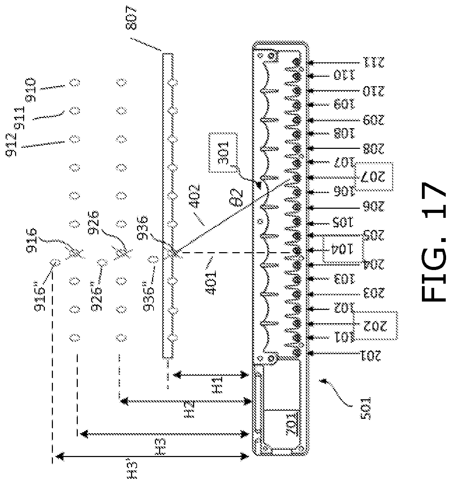

Reference is made to **FIGS. 16** and **17****,** which are simplified illustrations showing how the calibration tool of **FIG. 15** identifies how the emitters and detectors of the proximity sensor have been mounted therein, in accordance with an embodiment of the present invention. **FIGS. 16** and **17** show how imprecise placement of a light sensor **(****FIG. 16****)** or a light source **(****FIG. 17****)** is identified by the calibration tool of **FIG. 15****.** **FIG. 16** shows three rows of hotspots including hotspots **910** - **912, 919, 929,** and **939.** These are expected hotspot locations, i.e., proximity sensor **501** is designed to provide maximum detections of reflected light for respective activated source/sensor pairs when an object is placed at these locations. This is verified as calibration rod **807** moves closer to proximity sensor **501.** Each row of hotspots is situated at a fixed distance from proximity sensor **501.** Three distances are shown: *H1, H2* and *H3.*

**FIG. 16** shows how, when light sensor **207** is placed slightly to the left of its correct position within proximity sensor **501,** maximum detection measured at this light sensor corresponds to hotspot locations **919', 929'** and **939'.** Calibration rod **807** enters these positions at different distances than those expected. **FIG. 16** shows how calibration rod **807** arrives at hotspot location **919'** when it is a distance *H3'* from proximity sensor **501.** By analyzing a series of local maximum detections that share a common light sensor and occur at different distances than those expected, the calibration system detects the offset of a light sensor from its expected position. In some embodiments processor **701** controls, or receives input from, motor **803** and processor **701** updates its map of hotspots according to the actual local maximum detections.

**FIG. 17** shows how, when light source **104** is placed slightly to the left of its correct position within proximity sensor **501,** maximum detection measured for source/sensor pairs that include light source **104** are shifted from expected hotspot locations **916, 926** and **936,** to positions **916', 926'** and **936'.** **FIG. 17** shows how calibration rod **807** arrives at hotspot position **916'** when it is a distance *H3'* from proximity sensor **501.** By analyzing a series of local maximum detections that share a common light source and occur at different distances than those expected, the calibration system detects the offset of the light source from its expected position.

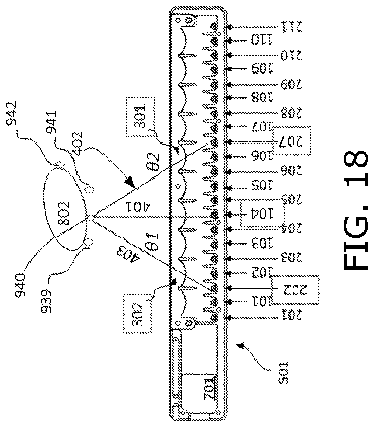

A proximity sensor according to the present invention is used to estimate a partial circumference of a proximal object. Reference is made to **FIG. 18****,** which is a simplified illustration of a proximity sensor detecting a proximal object, in accordance with an embodiment of the present invention. **FIG. 18** shows proximity sensor strip **501** and proximal object **802.** Four hotspot locations **939** - **942** along the edge of object **802** facing the sensor are shown. The reflection values associated with these hotspot locations are used to estimate the contour of this edge.

As described above, each hotspot location is associated with one or two source/sensor pairs. In **FIG. 18****,** hotspot location **940** is associated with source/sensor pairs **104/202** and **104/207.**

The reflection values are used to generate a two-dimensional pixel image of reflection values indicating where reflective surfaces are positioned. For example, when all hotspot locations for all source/sensor pairs in proximity sensor **501** are assigned their respective, normalized reflection values, the result is a two-dimensional image. The reflection values in different embodiments are normalized within a range determined by the number of bits provided for each pixel in the two-dimensional image, e.g., 0 - 255 for 8-bit pixel values, and 0 - 1023 for 10-bit pixel values.

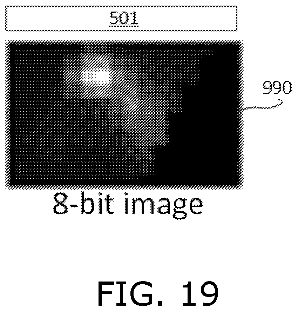

Reference is made to **FIG. 19****,** which is a simplified illustration of a two-dimensional image of detection values, in accordance with an embodiment of the present invention. **FIG. 19** shows proximity sensor **501** whose detection plane is directed downward and the resulting two-dimensional image **990** of reflection values generated by an object situated within that detection plane. The pixel values in image **990** are 8-bit values.

Because more than one source/sensor pair corresponds to each hotspot location, the reflection value for that location in the two-dimensional image can be derived in different ways. Namely, the forward-direction source/sensor pair can be used, or the backward-direction source/sensor pair can be used. In some embodiments, the average of these two values is used, and in other embodiments the maximum of these two values is used, such that some pixels derive their values from forward-direction source/sensor pairs, and other pixels derive their values from backward-direction source/sensor pairs.

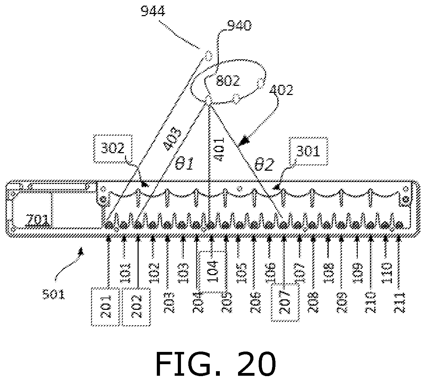

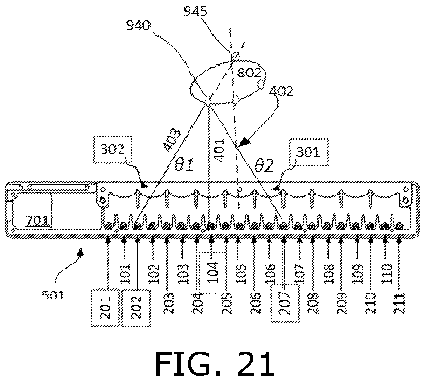

Certain reflection values for source/sensor pairs are not caused by a reflective object at the corresponding hotspot, but rather by stray reflections at entirely different locations. **FIGS. 20** and **21** show how these cases are identified. Once identified, the corresponding pixel values in the two-dimensional image are reset to zero.

Reference is made to **FIGS. 20** and **21****,** which are simplified illustrations of a detected reflection value for an emitter-receiver pair that is not associated with that pair's hotspot location, in accordance with an embodiment of the present invention. **FIG. 20** shows hotspot locations **940** and **944** aligned along a common emitter beam path **401.** Hotspot location **940** corresponds to source/sensor pairs **104/202** and **104/207,** and hotspot location **944** corresponds to source/sensor pairs **104/201** and **104/208.** It is clear from **FIG. 20** that any light from emitter **104** is blocked by object **802** well before it arrives at hotspot location **944,** and therefore any light detected at sensors **201** and **208** during activation of source **104** is not generated by a reflective object at hotspot location **944,** but is rather stray reflections off the object at other locations. Therefore, the reflection value appropriate for hotspot location **944** is zero.

This state is determined by the fact that source/sensor pair **104/202** has a significant detected reflection value, indicating that a reflective object is at corresponding location **940,** and therefore, light beam **401** does not arrive at location **944.** Moreover, because the lenses and the sensors are configured such that the maximum detection arrives at the sensor when it is reflected at angle *θ1* it is clear that the source/sensor pair detecting the maximum reflection from among all source/sensor pairs that share a common source is the pair detecting reflections from an object at, or near, the corresponding hotspot location. Indeed, in the example shown in **FIG. 20** the detection value for source/sensor pair **104/202** is much greater than the detection value for source/sensor pair **104/201.** For the same reason, the detection value for source/sensor pair **104/207** is much greater than the detection value for source/sensor pair **104/208.** A similar situation is illustrated in **FIG. 21****,** except that in this case the two hotspot locations are situated along a common detection path.

**FIG. 21** shows hotspot locations **940** and **945** aligned along a common maximum detected reflection path **403.** Hotspot location **940** corresponds to source/sensor pair **104/202,** and hotspot location **945** corresponds to source/sensor pair **105/202.** It is clear from **FIG. 21** that light from only one location can be reflected along path **403** onto receiver **202.** And because the detected reflection value for source/sensor pair **104/202** is greater than the detection value for source/sensor pair **105/202,** it is safe to assume that the reflecting object is at, or near, hotspot location **940,** and the detection value for source/sensor pair **105/202** is not caused by a reflective object at hotspot location **945.** Therefore, the reflection value appropriate for hotspot location **945** is zero.

In general, an emitted light path *LP,* such as path **401** in **FIG. 17****,** has a plurality of hotspot locations thereon, denoted *P₁, P₂,* ..., *P_{N},* at different distances from the proximity sensor **501,** such as hotspot locations **916, 926** and **936,** in **FIG. 17****.** When an object is located at one of these locations, denoted *Pᵢ* other hotspot locations *P*_{*i*+*j*} and *Pᵢ₋ₖ* also have corresponding detection values. In such cases, the hotspot location *Pₘₐₓ* for which a maximum detection value is detected from among hotspot locations along *LP,* is considered to correspond to the object, and all detection values for hotpot locations further from proximity sensor **501** are reset to zero. Detection values for hotpot locations between *Pₘₐₓ* and proximity sensor **501** are retained. Often, two hotspot locations *Pₘₐₓ* and *P*_{*max*+*1*} are used to calculate the location of the object, as explained hereinabove, and in such cases *P*_{*max*+*1*} is not reset to zero.

Similarly, a reflected light path RP, such as path **402** in **FIG. 16****,** has a plurality of hotspot locations thereon, denoted *P₁, P₂,* ..., *P_{N},* at different distances from the proximity sensor **501,** such as hotspot locations **919, 929** and **939,** in **FIG. 16****.** When an object is located at one of these locations, denoted *Pᵢ* other hotspot locations *Pᵢ₊ⱼ* and *Pᵢ₋ₖ* also have corresponding detection values. In such cases, the hotspot location *Pₘₐₓ* for which a maximum detection value is detected from among hotspot locations along RP, is considered to correspond to the object, and all detection values for hotpot locations further from proximity sensor **501** are reset to zero. Detection values for hotpot locations between *Pₘₐₓ* and proximity sensor **501** are retained. Often, two hotspot location *Pₘₐₓ* and *P*_{*max*+*1*} are used to calculate the location of the object, as explained hereinabove, and in such cases *P*_{*max*+*1*} is not reset to zero.

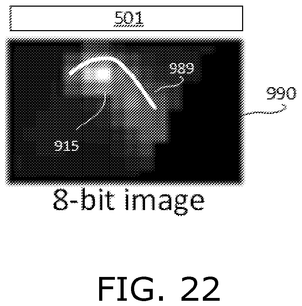

In this manner, the two-dimensional pixel image is refined and begins to represent the contour of the object facing the sensor. Reference is made to **FIG. 22****,** which is a simplified illustration of a detected partial circumference of an object in a two-dimensional image of detection values, in accordance with an embodiment of the present invention. **FIG. 22** shows the detected partial circumference **989** in the detection image **990** of **FIG. 19** and an example pixel **915** having a non-zero detection value, but whose appropriate reflection value is zero, as explained hereinabove.

The next step is to filter the pixels in this image to obtain sub-pixel precision for the location of the object's contour between hotspot locations. After calculating sub-pixel values, various edge detection filters are applied to the two-dimensional pixel image to identify the edges of the object facing the sensor and discard stray reflections. Known edge detection filters include Sobel, Canny, Prewitt, Laplace, gradient. This edge information is used to determine a length of this portion of the object, i.e., a partial circumference of the object, and its location.

The length of the detected portion of the object is calculated using different methods, in accordance with different embodiments of the invention. Some embodiments determine the number of pixels, or sub-pixels, along the detected portion of the object. Other embodiments calculate the sum of the distances between each pair of neighboring pixels, or sub-pixels, along the detected portion of the object. Still other embodiments determine an equation for a curve that passes through each of the pixels, or sub-pixels, along the detected portion of the object, and calculates the length of the partial circumference of the object according to this equation.

In some embodiments, in order to relax processor complexity, an estimate of the partial circumference is calculated based on three points: the point on the object for which there is a maximum detection value and the two outermost points along the partial circumference.

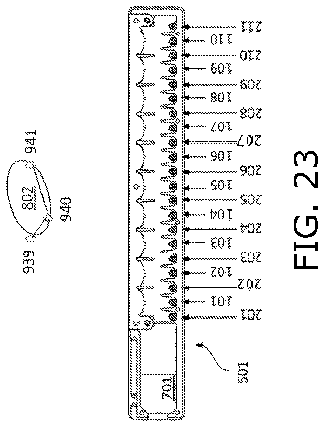

Reference is made to **FIG. 23****,** which is a simplified illustration of a method of estimating a partial circumference of an object, in accordance with an embodiment of the present invention. **FIG. 23** shows point **940** for which there is a maximum detection value and two outermost points **939** and **941** along the partial circumference of object **802.** An estimate of the partial circumference is the sum of the distances from point **939** to point **940** and from point **941** to point **940.** In order to further refine this calculation, without adding much complexity to the calculations, the system calculates the sub-pixel coordinates of these three positions using the immediate neighbors of the respective hotspot locations **939** - **941,** but does not calculate sub-pixel locations for any other pixels in the two-dimensional pixel image. Point **940,** or a respective sub-pixel location, for which there is a maximum detection value is used as the object's coordinates. Additional embodiments discussed in this description in relation to **FIGS. 13** - **17****,** **24** - **29****,** **39** and **40****,** do not form part of the invention but represent background art useful for understanding the invention.

In other embodiments of the invention, the shape of the proximity sensor is not a straight line, but circular, or wave-shaped to provide a 3-D detection volume, instead of a 2-D detection plane. In such alternative embodiments, the emitters and receivers are still alternated as they are in proximity sensor **501,** and each emitter is paired with each of the receivers as a source/sensor pair having a corresponding hotspot within a 3-D volume above the proximity sensor.

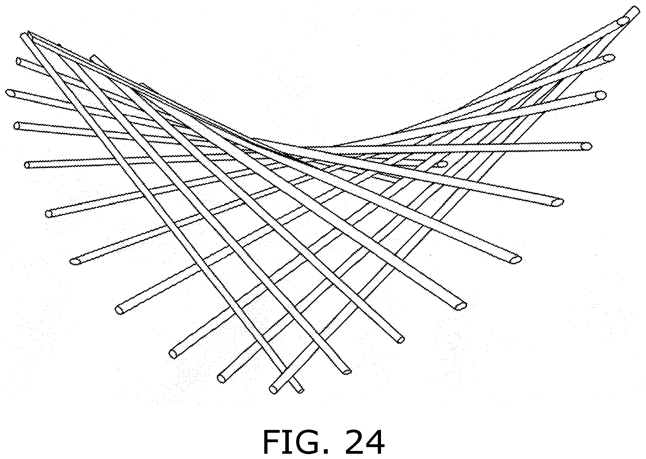

Reference is made to **FIG. 24****,** which is an illustration of a saddle roof or hyperbolic paraboloid corresponding to the emitter light paths and reflected light paths of a 3-D proximity sensor, in accordance with an embodiment of the present invention.

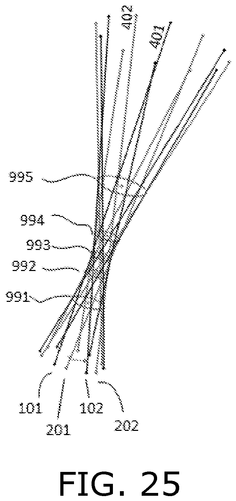

Reference is made to **FIG. 25****,** which is a simplified illustration of a circular arrangement of six emitters and six receivers arranged alternatingly along a circular base that provides 30 hotpot locations along a 3-D hyperboloid, in accordance with an embodiment of the present invention. **FIG. 25** shows emitters **101** and **102,** and receivers **201** and **202,** which provide 30 hotpot locations along a 3-D hyperboloid, in accordance with an embodiment of the present invention. **FIG. 25** shows five rings, **991** - **995,** of hotspot locations along the height of the hyperboloid.

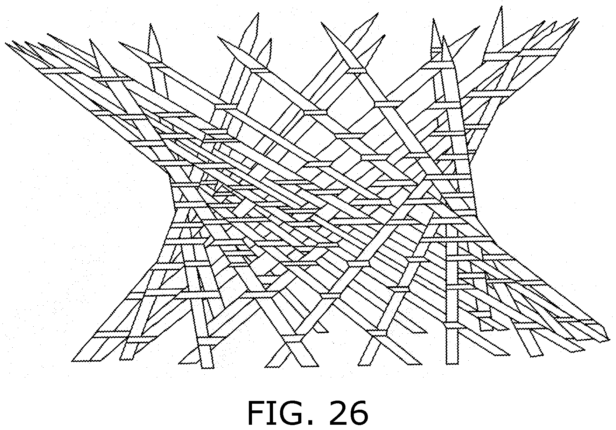

Reference is made to **FIG. 26****,** which is a simplified illustration of a grid representing emitted and reflected light beams from a circular arrangement of 16 emitters and 16 receivers arranged alternatingly along a circular base, which provide 176 hotpot locations along a 3-D hyperboloid, in accordance with an embodiment of the present invention. Alternative configurations include 4 emitters and 4 receivers for a stripped down hyperboloid, 3 emitters and 3 receivers for a regular octahedron and 2 emitters and 2 receivers for a regular tetrahedron. These 3-D proximity sensors are used inter alia for detecting in-air hand wave gestures.

Proximity sensors according to the present invention have numerous applications for touch screens, control panels and new user interface surfaces. The proximity sensor can be mounted anywhere -- on a wall, a window, placed on a notebook, and it will provide touch and gesture detection upon that item. These detected gestures are then used as input to electronic systems. For example, a gesture along a wall can dim the lighting in the room by mounting the sensor along an edge of the wall and communicating the detected gestures to the lighting system. Significantly, the proximity sensor is only mounted along one edge of the detection area, reducing component cost and providing more flexibility for industrial design of touchscreens and touch-sensitive control panels.

A door lock system according to the present invention has two modes of operating. In the first mode, the door is locked and unlocked using prior art methods, such as by a transponder signal, by pressing a key fob switch, or by a physical key inserted into a keyhole and rotated. In the second mode, the user locks the door by entering a gesture on a gesture sensor. The user subsequently unlocks the door by entering that same gesture on the gesture sensor. However, unlike prior art gesture-based lock systems, this unlock gesture is not defined as an unlock gesture until the user enters it to lock the door.

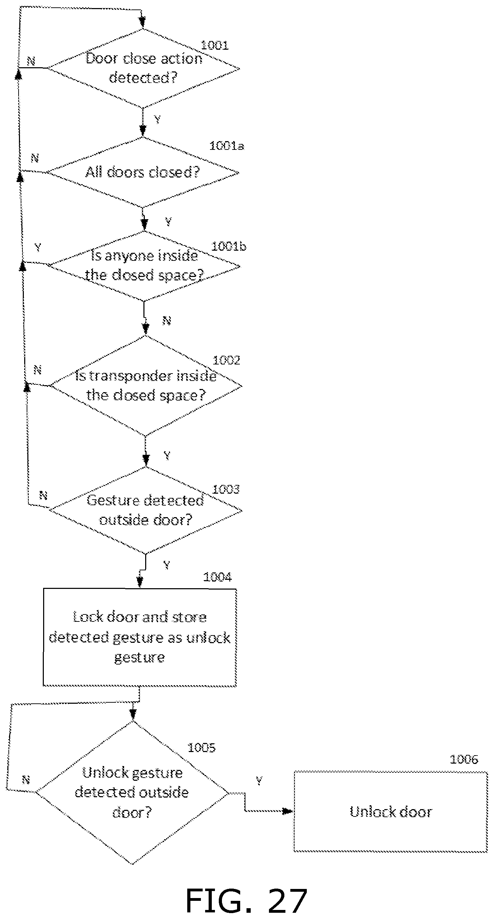

Reference is made to **FIG. 27****,** which is a simplified flowchart of a method of locking and unlocking a door, such as a car door, in accordance with an embodiment of the present invention. The method begins at step **1001** when the door is closed. At step **1002** the closing of the door is detected by the door lock system and this triggers the system to activate a transmitter unit connected to the lock system to locate a portable transponder, and specifically, to identify whether that transponder is behind the closed door, inside the closed interior, e.g., inside the car. If that transponder is inside the closed interior, the system activates a gesture detection apparatus directed at detecting gestures on, or near, the exterior of the door. At step **1003** if the gesture detection apparatus detects a gesture, then at step **1004** the door lock is activated and the detected gesture is stored to memory. At step **1005** the stored gesture is detected again by the gesture detection apparatus, and at step **1006** the door is unlocked.

In certain embodiments where multiple doors provide access to a common interior space, e.g., a car, the lock system only proceeds from step **1001** if at step **1001a** all other doors to the common interior are closed when the closing of the door is detected.

In some embodiments, the gesture detection apparatus is activated when the door is closed only if at step **1001b** it is further determined that no one remains inside the closed space. This is determined using movement sensors, cameras or other means known to those skilled in the art.

In some embodiments, the gesture detection apparatus is activated when the door is closed, without identifying whether a transponder is inside the closed interior. This enables using the gesture lock-unlock method according to the present invention in systems that do not include transponders, and also enables using the gesture lock-unlock method when the user removes the transponder from the closed space before closing the door.

In some embodiments the gesture detection apparatus is the proximity sensor strip described hereinabove mounted along an edge of the driver-side window to detect gestures made on the exterior of the window. In other embodiments, other types of gesture detection apparatus are provided, inter alia, cameras, optical touch screens based on blocked light, optical touch screens based on frustrated total internal reflection (FTIR), optical proximity sensors, capacitive touch screens and resistive touch screens. In other embodiments, the gesture detection apparatus detects gestures on a wall next to the door, on the door handle or doorknob, or in the open space in front of the door.

Different systems enable detecting different types of gestures. Example gestures include: touching one or more locations on a surface; one or more two-dimensional lines or squiggles traced by a finger on a surface; one or more two-dimensional lines or squiggles traced by multiple fingers on a surface, e.g., multi-finger pinch, spread or rotation gestures; hand wave gestures; holding up a number of fingers; sign language gestures; and full body movements.

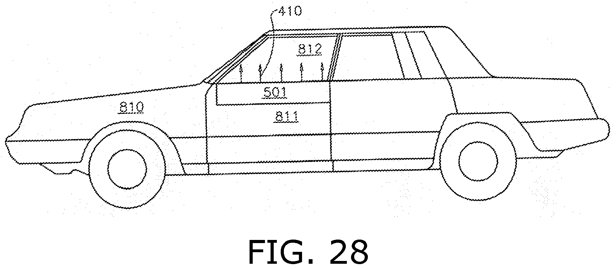

Reference is made to **FIG. 28****,** which is a simplified illustration of a car that practices the lock-and-unlock method of **FIG. 27****,** in accordance with an embodiment of the present invention. **FIG. 28** shows a car **810** having a door **811** and a side window **812.** A proximity sensor strip **501** is mounted beneath window **812** and projects light beams **410** along the outer surface of window **812** to detect gestures on the window, e.g., a shape traced by a finger gliding upon the window.

In some embodiments, the stored gesture includes the shape traced by the finger, but not the location on window **812** at which the shape was originally traced. In other embodiments, the location on window **812** at which the shape was originally traced is also stored, and the user must recreate the gesture at the same location in order to unlock the door.

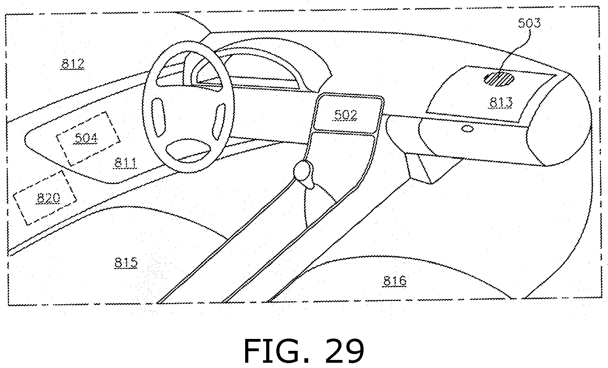

Reference is made to **FIG. 29****,** which is a simplified illustration of the interior of car **810,** in accordance with an embodiment of the present invention. **FIG. 29** shows driver seat **815,** passenger seat **816,** glove compartment **813,** driver-side door **811** and driver-side window **812.** A portable electronic transponder **503** is shown inside glove compartment **813.** A transmitter unit **504** is shown mounted in door **811** to interrogate transponder **503** when the door is closed and determine whether the transponder is inside the car or outside. If the transponder is inside the car, transmitter unit **504** communicates this to keyless entry system **820** which then activates the gesture detection apparatus (not shown in **FIG. 29**).

**FIG. 29** also shows motion sensor **502** mounted in the car dashboard for detecting if any people remain in the car after door **811** is closed. Sensor **502** is also in communication with keyless entry system **820.** Keyless entry system **820** will only enable the gesture detection apparatus to activate the lock if no one is inside the car.

In accordance with an embodiment of the present invention, a laptop accessory is provided that enables converting a non-touchscreen laptop into a touchscreen laptop. The accessory is a proximity sensor bar featuring an elongated proximity sensor array. Although this proximity sensor bar is described as an accessory for laptop computers, it is useful for other computer displays, inter alia, all-in-one computers, desktop computers, tablets and televisions. It is also useful for converting any surface, including non-display surfaces, such as a table, wall, or window, into a touch-sensitive surface on which gestures are performed to control an electronic device. The proximity sensor bar includes any of the proximity sensors discussed hereinabove, inter alia, with reference to **FIGS. 10** - **26****,** incorporated into a touch sensor accessory that communicates user interface commands to a separate electronic device.

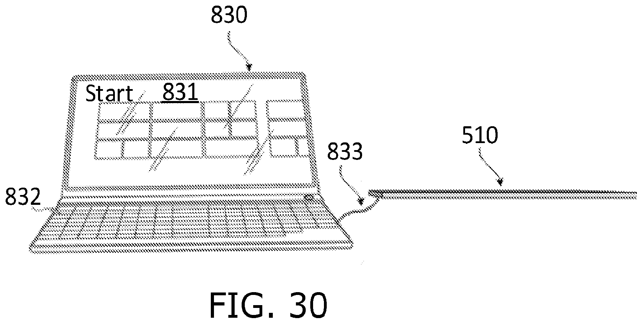

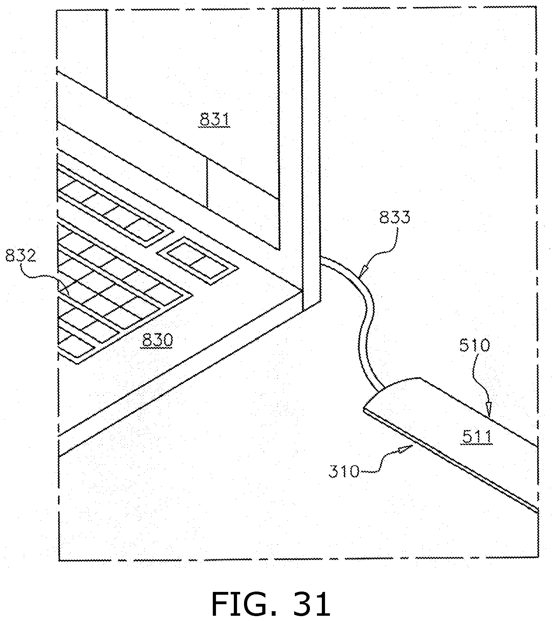

Reference is made to **FIGS. 30** and **31****,** which are simplified illustrations of a proximity sensor bar configured as a laptop accessory, in accordance with an embodiment of the present invention. **FIGS. 30** and **31** show proximity sensor bar **510** connected to laptop computer **830** via wire **833.** Typically a USB connector situated at the end of wire **833** is inserted into a USB socket in laptop **830.** Laptop computer **830** includes display **831** and keyboard **832.** The operating system running on laptop **830** supports touchscreen user interface commands enabling communication between proximity sensor bar **510** and connected laptop computer **830** using a USB-HID digitizer. This enables the proximity sensor bar to map multiple touch coordinates to the screen, and send those coordinates to the laptop which interprets those coordinates into one or more gestures. In some embodiments, proximity sensor bar **510** is configured to provide mouse or trackpad functionality by reporting detected object coordinates as a single-finger trackpad. In certain embodiments, proximity sensor bar **510** is configured to interpret gestures into commands, such as rotate, scroll, zoom, copy, cut, paste, and send those commands to the operating system, instead of reporting touch coordinates or gestures.

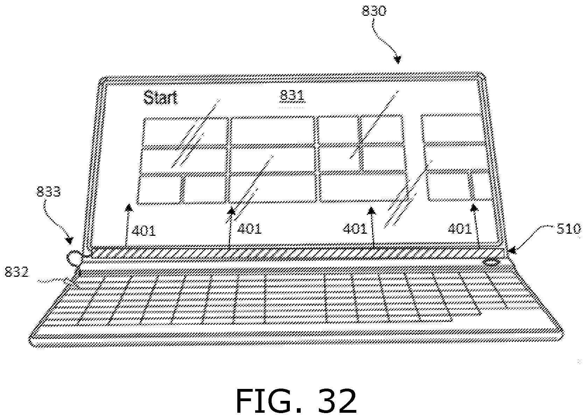

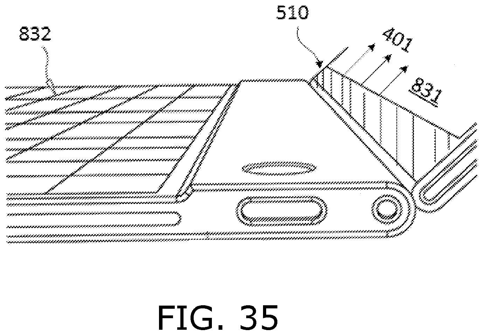

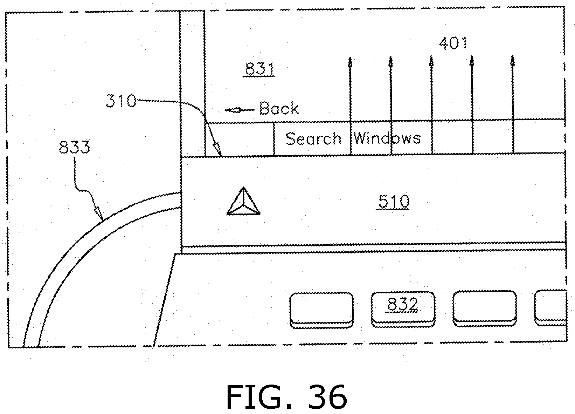

Proximity sensor bar **510** includes housing **511** and lenses **310,** through which light beams **401,** shown in **FIGS. 32** and **35** - **38****,** are projected into the detection plane as explained hereinabove. Light beams reflected by an object inserted into the detection plane re-enter proximity sensor bar **510** through lenses **310.**

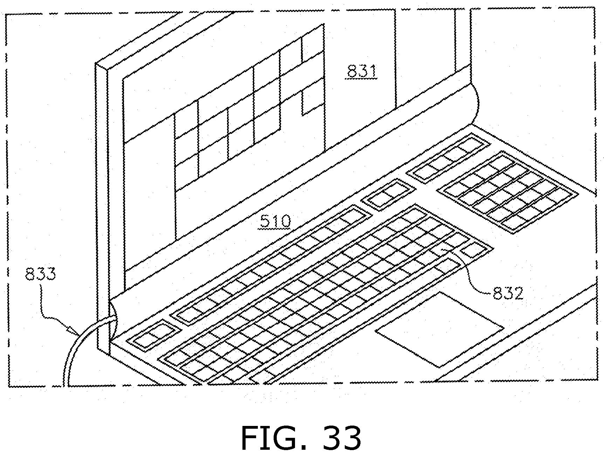

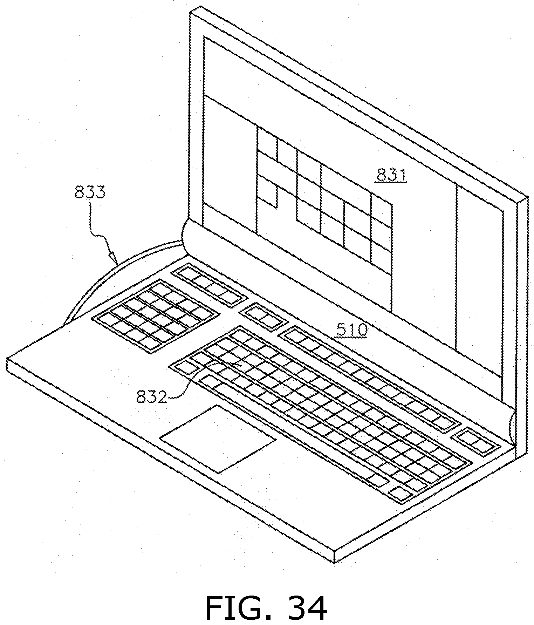

Reference is made to **FIGS. 32** - **36****,** which are simplified illustrations of the laptop accessory of **FIGS. 30** and **31** situated along an edge of a laptop display to convert a non-touchscreen display into a touchscreen display, in accordance with an embodiment of the present invention. **FIGS. 32** - **36** show proximity sensor bar **510** attached to the bottom edge of laptop display screen **831.** The detection plane detected by proximity sensor bar **510** is parallel to the surface of laptop display screen **831,** as illustrated by light beams **401** projected out of proximity sensor bar **510.** Proximity sensor bar **510** is as long as the bottom edge of screen **831** in order to provide touch sensitivity to the entire display. Different models of proximity sensor bar **510** are manufactured in different sizes to support different screen sizes. In some embodiments, housing **511** is magnetically attached to laptop **830** below the bottom edge of screen **831.** The detection plane is mapped to the screen surface according to the expected location of proximity sensor bar **510** relative to screen **831.** E.g., proximity sensor bar **510** may be placed along any of the four screen edges, each placement transposing the detection plane in relation to the screen. In some embodiments, a socket is provided in the laptop housing for receiving proximity sensor bar **510.** In some cases, a connector provided in the socket, and corresponding connection pads provided on proximity sensor bar **510,** are used to connect proximity sensor bar **510** to laptop **830,** instead of wire **833** and the USB socket and plug discussed hereinabove.

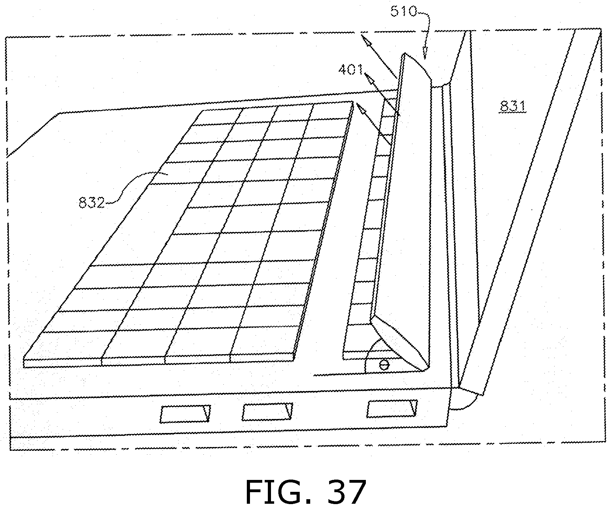

Reference is made to **FIG. 37****,** which is a simplified illustration of the laptop accessory of **FIGS. 30** and **31** situated along an edge of a laptop display and rotated away from the display to provide a detection plane in the airspace between the display and the keyboard, in accordance with an embodiment of the present invention. **FIG. 37** shows proximity sensor bar **510** rotated away from display screen **831** such that the projected light beams **401,** and the corresponding detection plane, are directed into the airspace between display **831** and keyboard **832.** This configuration is useful for browsing photos and presentations: the user advances forward and backward through the presentation by swiping his hand or finger through the air across the detection plane, without touching the screen. Angle *θ* shown in **FIG. 37** is 45°, but can be any angle. In some embodiments, proximity sensor bar **510** reports the same coordinates, gestures or commands, to laptop **830** regardless of whether the detection plane is parallel to the screen surface or directed into the airspace away from the display. In other embodiments, proximity sensor bar **510** reports different coordinates, gestures or commands, when the detection plane is parallel to the screen surface and when it is directed into the airspace away from the display. In other embodiments, when the detection plane is directed into the airspace away from the display, proximity sensor bar **510** employs a subset of the coordinates, gestures or commands it employs when the detection plane is parallel to the screen surface. E.g., relative movement gestures, such as sweep gestures and pinch gestures, are supported, but the location of a detected object is not mapped to a specific screen location when the detection plane is directed into the airspace away from the display.

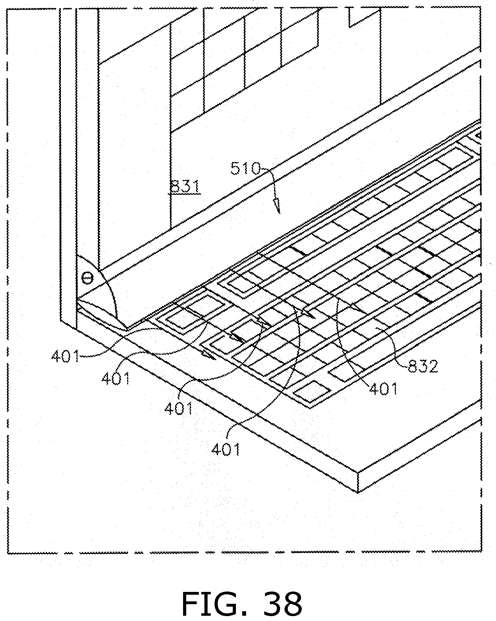

Reference is made to **FIG. 38****,** which is a simplified illustration of the laptop accessory of **FIGS. 30** and **31** situated along an edge of a laptop display and rotated away from the display to provide a detection plane along the surface of the laptop keyboard, in accordance with an embodiment of the present invention. **FIG. 38** shows proximity sensor bar **510** rotated away from display screen **831** such that the projected light beams **401,** and the corresponding detection plane, are parallel to the surface of keyboard **832.** This configuration provides touch functionality to the upper surface of keyboard **832.** In this configuration, when proximity sensor bar **510** is configured to provide mouse or trackpad functionality by reporting detected object coordinates as a single-finger trackpad, laptop **830** can eliminate the trackpad typically provided below the keyboard on laptops today. Rather, the user can use the upper surface of the keypad as a trackpad. In some embodiments, in order to enable both keyboard input and trackpad input, trackpad functionality is suspended when a key is depressed, and trackpad functionality is activated when a finger moves across the keys without depressing any key at the end of the movement. Angle *θ* shown in **FIG. 38** is greater than 90°.

Some laptops, known as 2-in-1 laptops, may be configured in both laptop mode, having a keyboard in front of the display, and in tablet mode, having nothing in front of the display. When in tablet mode, proximity sensor bar **510** can be placed along the bottom edge of the display screen facing away from the display; e.g., such that the detection plane is parallel to the tabletop on which the display is standing. The user can then control the presentation or video on the display using gestures performed on the table surface. E.g., swipe along the table surface parallel to proximity sensor bar **510** to advance or go backward; pinch on the table surface to zoom, perform a multi-finger rotation gesture on the table surface to rotate an image on the display.

In some embodiments, the light emitters in proximity sensor bar **510** are semiconductor laser diodes such as vertical-cavity surface-emitting lasers (VCSELs). Other light emitters can alternatively be used. In some embodiments, proximity sensor bar **510** is manufactured by placing uncovered semiconductor laser diodes, i.e., the bare semiconductor without any lens, and uncovered photodiodes, also without any lens, onto a PCB. The only lenses provided for the laser diodes and photodiodes is a light guide unit, such as the elongated light guide illustrated in **FIG. 10****,** that includes lenses **303** and **304.** The light guide unit is positioned with very high precision relative to the VCSEL diodes by an automated production line for high production volumes.

In the prior art optical components are aligned in an automated production line by matching a hole pattern on the component carrier (PCB) with guides (pins) on the component to be placed. Alternatively, fiducial markers on the PCB are used to place the component.

In contrast, the present invention uses the diodes themselves as fiducial markers to place the light guide exactly where it needs to be in relation to the diodes.

In some embodiments, prior to mounting the diode components, an adhesive is attached to the PCB, which can be activated quickly; e.g. by exposure to UV light, to fix the component before the automated picking unit releases it. Thus, the component is secured and fixed at its location on the PCB before the light guide is mounted on the PCB. The light guide is then picked up by the automated production line and positioned on the PCB by vision technology using the secured diodes as fiducial markers, thereby placing the light guide on the PCB in precise relation to the diodes. This precise positioning methodology increases the opportunity for advanced high resolution applications at a competitive cost.

The elongated light guide illustrated in **FIG. 10** includes lenses **303** and **304,** and more generally, includes multiple lenses that correspond to respective emitters and light detectors. In some embodiments, each lens is assembled on the PCB separately, in relation to its corresponding emitter, using that emitter as a fiducial marker.

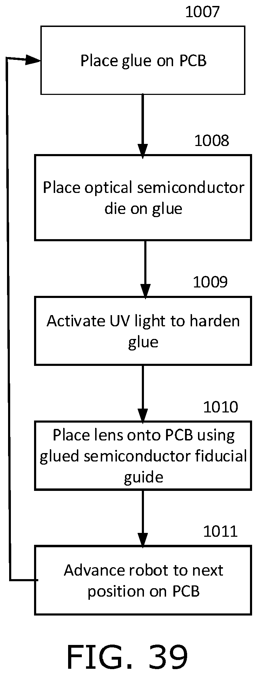

Reference is made to **FIG. 39****,** which is a simplified flow chart of a process for assembling a proximity sensor, in accordance with an embodiment of the present invention. The process uses a robot that fetches optical components and places them on a PCB using machine vision. At step **1007,** the robot applies glue to the PCB at a location at which an optical component such as a VCSEL semiconductor diode or a semiconductor photodiode is to be placed. At step **1008,** the robot places the optical component on the glue, and at step **1009,** the glue is hardened by exposure to UV light without the robot releasing the optical component. At step **1010,** the robot fetches a lens for the glued optical component. Because the optical component is affixed to the PCB without any package, the small size of the components facilitates its use as a fiducial marker for placement of the lens. Thus, the robot aligns the lens on the PCB with that lens's optical component using the optical component as a fiducial marker for placement of the lens. At step **1011** the robot advances to repeat steps **1007** - **1010** for the next optical component and its corresponding lens.

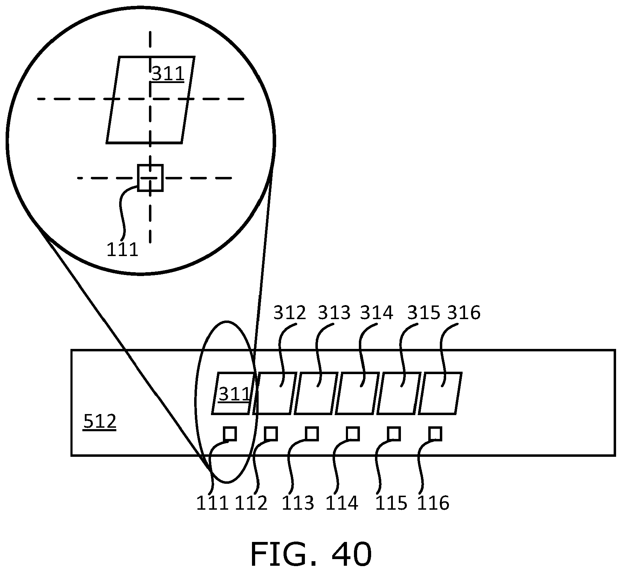

Reference is made to **FIG. 40****,** which is a simplified illustration of a proximity sensor being assembled according to the process of **FIG. 39****.** At each step, one emitter and one lens are assembled on the PCB. **FIG. 40** shows proximity sensor PCB **512** after six emitter-lens pairs have been mounted thereon. Each emitter **111** - **116** is placed on PCB **512** by an automated picking unit and attached thereto, e.g., by exposure to UV light as discussed hereinabove. Next, the automated picking unit fetches a respective lens **311** - **316** and mounts it on PCB **512** using the corresponding emitter as a fiducial marker. This precise placement is illustrated by the enlarged inset showing alignment of emitter **111** with lens **311.** This process is then repeated for the remaining emitters and their respective lenses, assembling an entire proximity sensor bar.

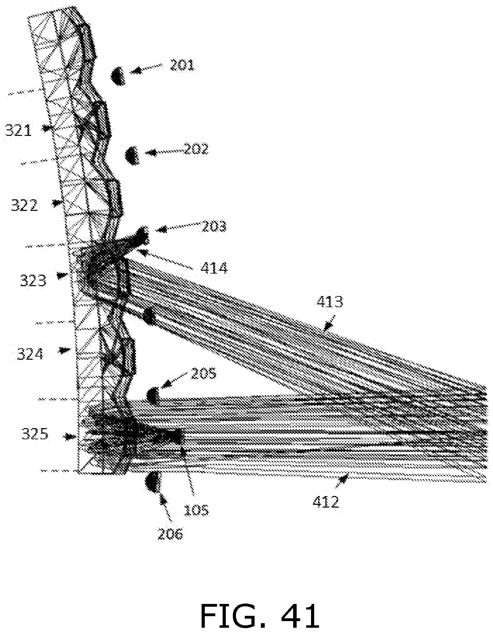

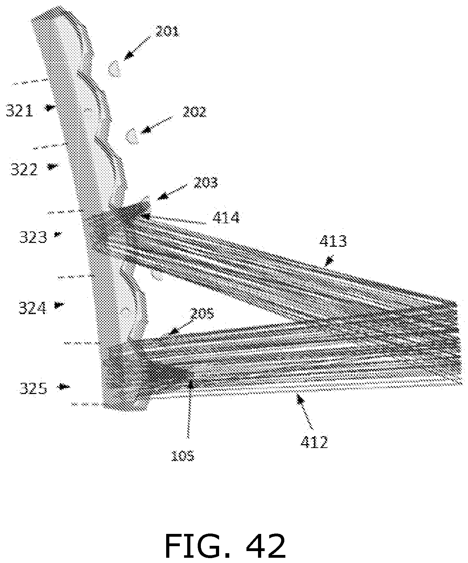

Reference is made to **FIGS. 41** and **42****,** which are simplified illustrations of light beams of a proximity sensor detecting an object, in accordance with an embodiment of the present invention. **FIGS. 41** and **42** show a light path used to detect an object, and individual lens structures **321** - **325.** Each lens structure serves a respective opposite emitter and two detectors, one to the left of the emitter and one to the right of the emitter. Thus, lens structure **325** serves emitter **105** and detectors **205** and **206.** In addition each detector is served by two lens structures whereby detector **205** receives reflected light from lens structures **324** and **325.** In **FIGS. 41** and **42****,** light from emitter **105** is reflected by an object (not shown) into lens structure **323** and onto detector **203.** Three segments of the detected light are indicated in **FIGS. 41** and **42****;** namely, light beam **412** projected outward from lens structure **325** and radially outward of the proximity sensor, light beam **413** reflected by the object into lens structure **323,** and light beam **414** directed by lens structure **323** onto detector **203.**

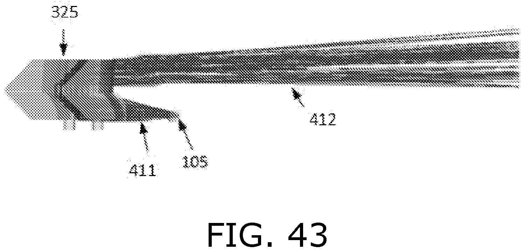

Reference is made to **FIG. 43****,** which is a simplified illustration of a side view of a proximity sensor and light beams projected therefrom, in accordance with an embodiment of the present invention. **FIG. 43** shows light beams projected radially outward from a proximity sensor, and a cutaway side view of the light path illustrated in **FIGS. 41** and **42****.** Light beam **411** from emitter **105** enters lens structure **325,** where it is redirected outward as light beam **412.**

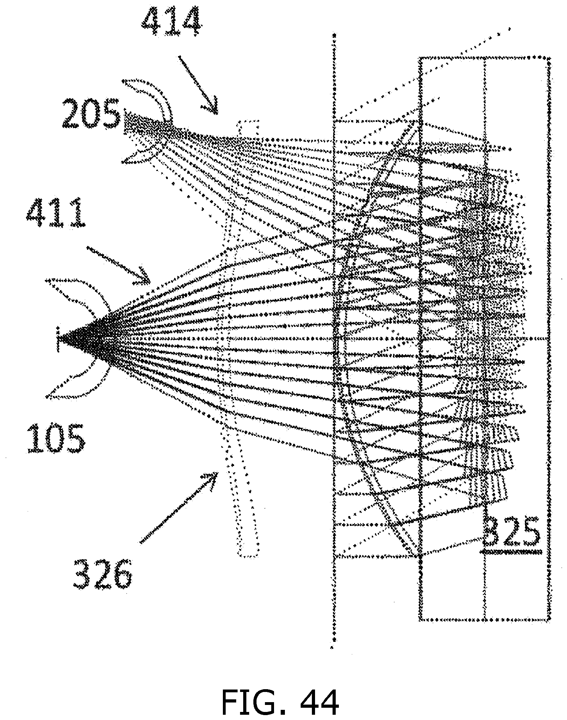

Reference is made to **FIG. 44****,** which is a simplified illustration of a proximity sensor lens and associated optical components viewed from above and light beams projected through that lens, in accordance with an embodiment of the present invention. **FIG. 44** shows a top view of lens **325** configured both for collimating light rays **411** from emitter **105** and for collecting light rays **414** onto PD **205.** Different portions of entry/exit surface **326** are optimized for collimating light rays **411** from emitter **105** entering through surface **326** and for collecting rays **414** exiting through surface **326** onto PD **205.** Indeed, that portion of surface **326** opposite emitter **105** is convex, whereas the portion of surface **326** optimized for collecting light onto PD **205** is concave. Thus, surface **326** is alternately concave and convex. However, the remaining surfaces in light guide **325** serve both the incoming and outgoing light beams **411** and **414;** only at surface **326** are the two sets of light beams refracted by different surfaces.

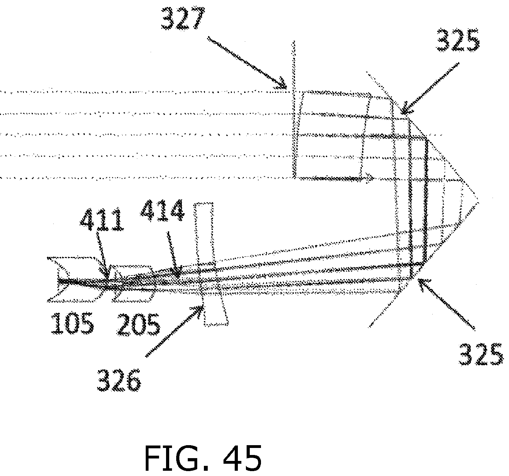

Reference is made to **FIG. 45****,** which is a simplified illustration of a side view of lens **325** and components of **FIG. 44** and light beams projected through that lens, in accordance with an embodiment of the present invention. **FIG. 45** shows lens **325** collimating emitter beams **411** and concentrating incoming beams **414** onto PD **205.** Lens **325** has a folded lens structure providing two, internal collimating reflective surfaces. The folded lens structure is discussed in U.S. Patent No. 9,063,614 entitled OPTICAL TOUCH SCREENS. The lenses described hereinabove with reference to **FIGS. 41** - **45** are usable for various proximity sensors, inter alia, for the proximity sensors described hereinabove with reference to **FIGS. 1** - **39****,** for a touch-sensitive steering wheel as discussed in U.S. Patent No. 8,775,023 entitled LIGHT-BASED TOUCH CONTROLS ON A STEERING WHEEL AND DASHBOARD, and for proximity sensors for car doors as discussed in U.S. Publication No. 2015/0248796 A1 entitled DOOR HANDLE WITH OPTICAL PROXIMITY SENSORS.

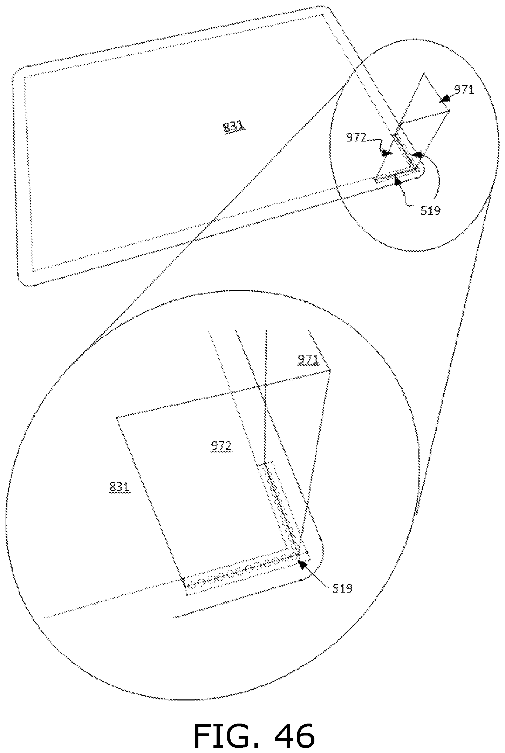

Reference is made to **FIG. 46****,** which is a simplified illustration of an L-shaped optical proximity sensor situated at a corner of a screen, in accordance with an embodiment of the present invention. The proximity sensor employed in this embodiment is any of the proximity sensors discussed hereinabove. The embodiment shown in **FIG. 46** provides mouse tracking or trackpad functionality on a display device, inter alia, a computer monitor, a television, a tablet computer or a laptop computer, in case there is no space to fit a normal trackpad, or in case the user does not want to touch a surface for various reasons, or as a very cheap alternative for providing touch sensitivity to a portion of a screen. **FIG. 46** illustrates a corner of a display monitor, and an enlarged view of the touch sensitive portion. Optical proximity sensor **519** is formed into an "L" shape and is situated along a short segment of adjacent edges of screen **831.** Optical proximity sensor **519** projects light beams perpendicular to the screen surface, i.e., towards the user facing the screen, as illustrated by detection planes **971** and **972,** and thereby tracks movements in the *X* and *Y* directions in the airspace above the two-dimensional portion of screen **831** bordered by optical proximity sensor **519.** This airspace operates as a virtual trackpad whereby movements in the *X* and *Y* directions in this airspace control movement of a cursor on the screen, or manipulate a displayed image, e.g., scroll and zoom. In some embodiments, optical proximity sensor **519** projects light beams at a non-perpendicular angle to the screen surface.

In some embodiments of the present invention movement of a hand in the airspace above sensor **519** is tracked by the sensor based on the non-uniform surface of the hand being tracked, e.g., the palm or fingers. For example, when tracking the palm, different parts of the palm surface reflect the projected light differently, which enables the sensor to identify a direction of movement of the different parts of the palm and combine those movements into a single directional gesture.

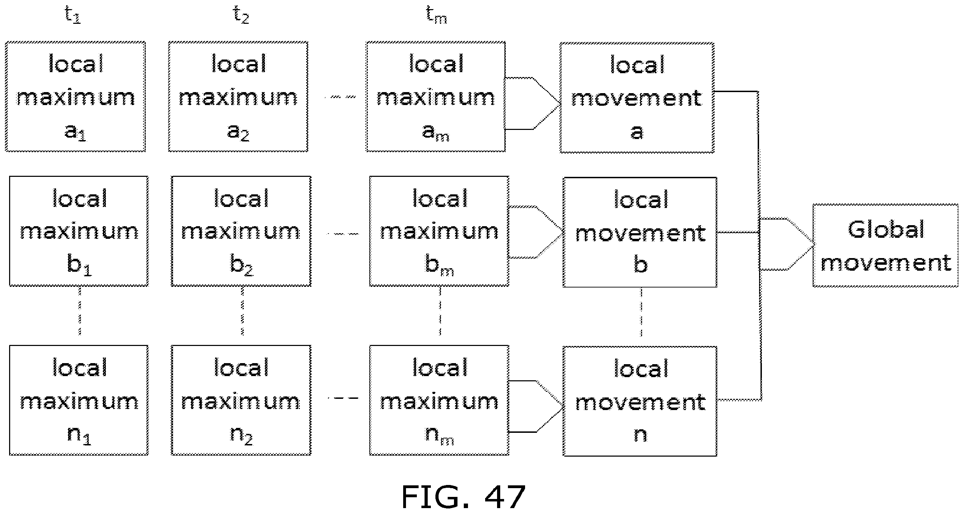

Reference is made to **FIG. 47****,** which is a simplified flow diagram of a method of identifying a gesture, in accordance with an embodiment of the present invention. The method of **FIG. 47** calculates a directional movement of an object in accordance with an embodiment of the invention. At each sampling time t, proximity sensor **519** identifies a plurality of local maxima among the co-activated emitter-detector pairs. **FIG. 47** shows a plurality of local maxima, *a, b* through n, each maximum being tracked at times, *t₁, t₂* through *tₘ.* Proximity sensor **519** determines simultaneous movements of each local maximum, *a, b* through *n* respectively, over a time interval. At the end of the time interval, proximity sensor **519** combines these simultaneous tracked movements into a single global directional movement and interprets that global directional movement as a user input gesture. Although reference is made to proximity sensor **519** performing these operations, various operations of the process may be performed by a separate processor while still falling within the scope of the present invention. Also, reflection values other than maxima may be tracked, e.g., a group of neighboring reflection values forming a pattern may be tracked instead of an individual maximum value. A plurality of these tracked patterns can be combined to identify a global movement. Alternatively, a tracked pattern of neighboring reflection values is used as the identified global movement of the object.

In addition to using two-dimensional sweep gestures above the screen to manipulate a cursor or image in two dimensions, the user also moves the cursor or image along the x-axis by sliding his finger along the X-axis portion of L-shaped proximity sensor **519.** Similarly, the user moves the cursor or image along the *y*-axis by sliding his finger along the *Y*-axis portion of L-shaped proximity sensor **519.** To select an item on the screen at the cursor location, the user taps proximity sensor **519** at any location on proximity sensor **519;** the tap need not be performed at the previously touched location.

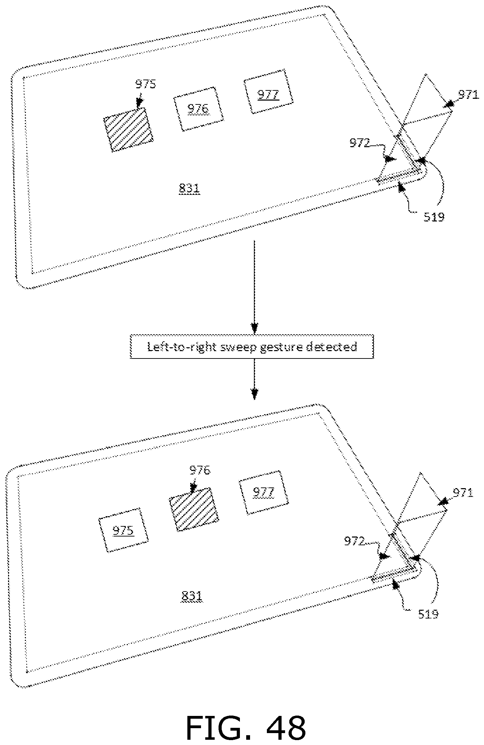

Reference is made to **FIG. 48****,** which is a simplified illustration of a user interface, in accordance with an embodiment of the present invention. **FIG. 48** shows a user interface that displays a plurality of icons or buttons **975** - **977** wherein one icon or button is selected, as illustrated by hatching. The user's input changes which icon is selected, e.g., moving the hatching from icon **975** to icon **976,** but no cursor image is provided. In this case, gestures described above for moving the cursor move the selection from one icon or button to another. Thus in **FIG. 48** a left-to-right sweep gesture is detected by proximity sensor **519** and in response thereto selection moves from icon **975** to icon **976.** As discussed hereinabove, sensor **519** also detects two-dimensional gestures such as diagonal sweep gestures and further detects approach gestures based on whether the object such as the user's hand is moving toward the screen or moving away from the screen. Thus, gestures in three dimensions are detected.

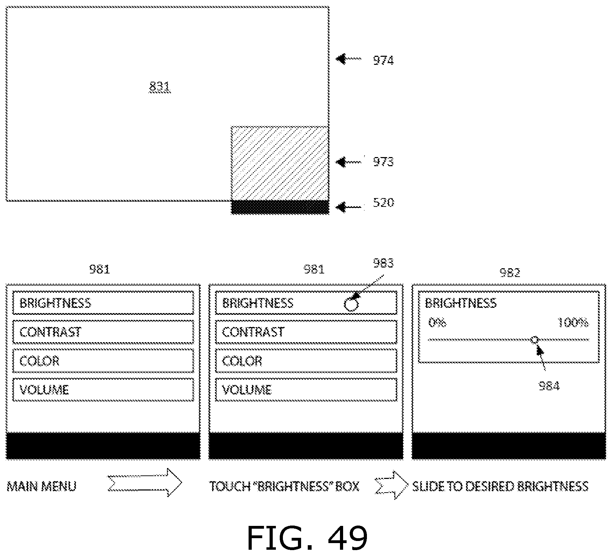

Reference is made to **FIG. 49****,** which is a simplified illustration of an optical proximity sensor situated along a short segment of a display edge for adjusting display parameters, in accordance with an embodiment of the present invention. The proximity sensor employed in this embodiment is any of the proximity sensors discussed hereinabove. **FIG. 49** shows a monitor **831** having proximity sensor bar **520** situated along a short segment of the bottom edge of monitor **831.** The light beams from proximity sensor bar **520** are directed parallel to the screen surface to provide detection area **973,** whereas the remainder of screen **831** forms non-touch-sensitive portion **974.** Controls **981** and **982** for adjusting monitor parameters such as brightness and contrast, are provided on screen **831** within detection area **973.** For example, main menu **981** enables the user to select a parameter to adjust from among brightness, contrast, color and volume. In **FIG. 49** the user taps menu option **983** to select brightness. In response to this tap, main menu **981** is replaced with slider control **982** in detection area **973** enabling the user to drag scroll knob **984** along the slider bar - right to increase brightness, and left to decrease brightness.

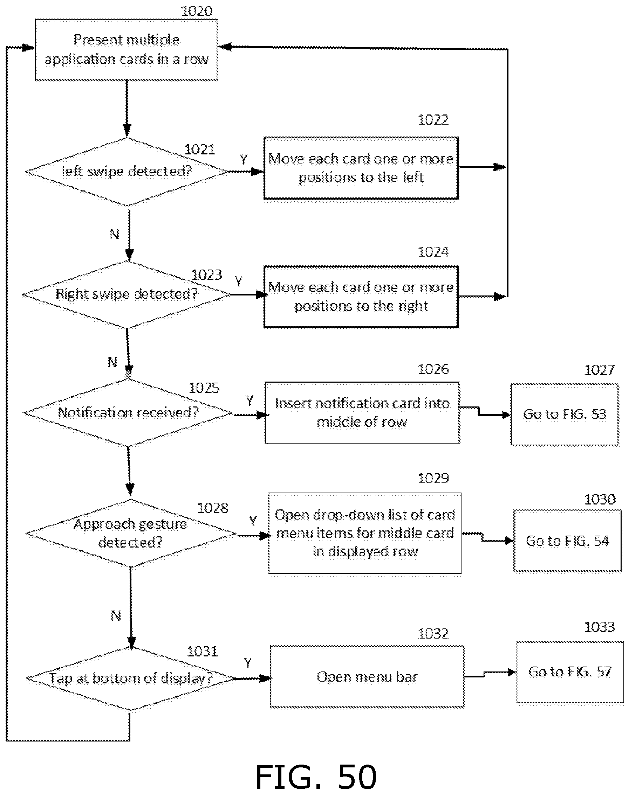

Another user interface is a GUI for a display or HUD mounted in a vehicle, described by **FIGS. 50** - **58****.** The GUI provides two different modes of navigating through the GUI options: (i) contextual navigation through application cards, and (ii) hierarchical navigation using nested levels of menus and lists.

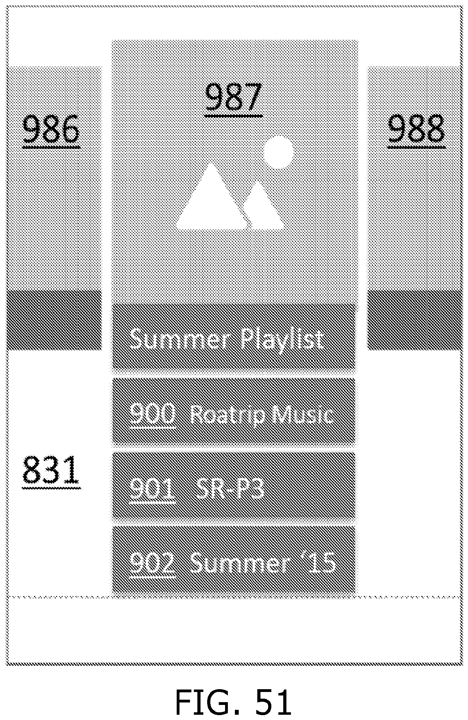

Reference is made to **FIGS. 50****,** **53****,** **54** and **57****,** which are flow charts for an in-vehicle infotainment system GUI, in accordance with an embodiment of the present invention. Reference is also made to **FIGS. 51****,** **55****,** **56** and **58****,** which are screenshots of the in-vehicle infotainment system GUI of **FIGS. 50****,** **53****,** **54** and **57****,** in accordance with an embodiment of the present invention. As shown in **FIG. 50****,** at step **1020** a plurality of application cards representing frequently used media, phone and navigation and other contextual events relevant to the user are arranged on the display. In some embodiments these cards are arranged in a row that extends beyond the display, and the user pans the row of cards to move cards into and out of the display, as indicated by steps **1021** - **1024.** The user taps an application card to select it as the active application in the GUI.

**FIG. 51** shows application cards **986** - **988** arranged in a horizontal row across display **831.**

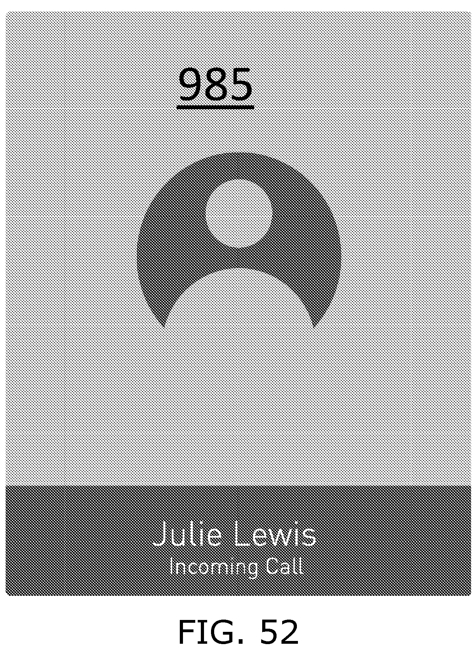

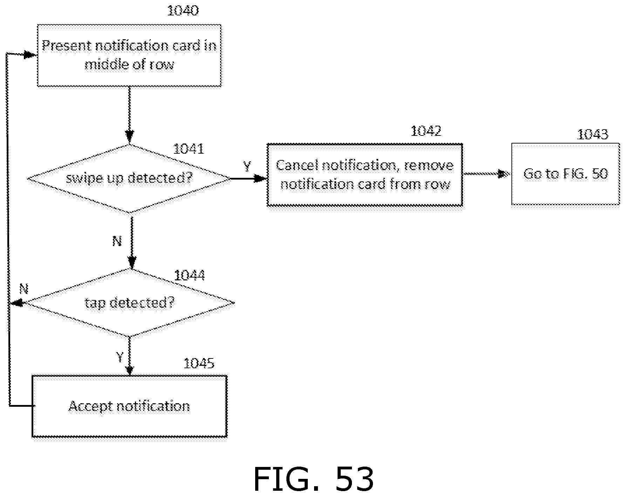

Returning back to **FIG. 50****,** at steps **1025** - **1027** a notification is presented by the GUI as a card inserted in the middle of the display within the row of application cards, moving other cards in the row left or right. Reference is made to **FIG. 52****,** which is an illustration of a notification card used in the in-vehicle infotainment system GUI of **FIGS. 50****,** **51** and **53 - 58****,** in accordance with an embodiment of the present invention. **FIG. 52** shows a notification card **985** for an incoming call. To dismiss the notification, e.g., to reject the incoming call, the user swipes upward on the display, as per steps **1041** - **1043** in **FIG. 53****.** To accept the notification, e.g., to accept the incoming call, the user taps on the display as per steps **1044** and **1045** In **FIG. 53****.**

Returning back to **FIG. 50****,** at steps **1028** - **1030,** a list of contextual options for the currently active application card is displayed in response to the user approaching the display, e.g., by extending a hand toward the display. List items **900** - **902** in **FIG. 51** illustrate such a contextual list for current active application **987.**

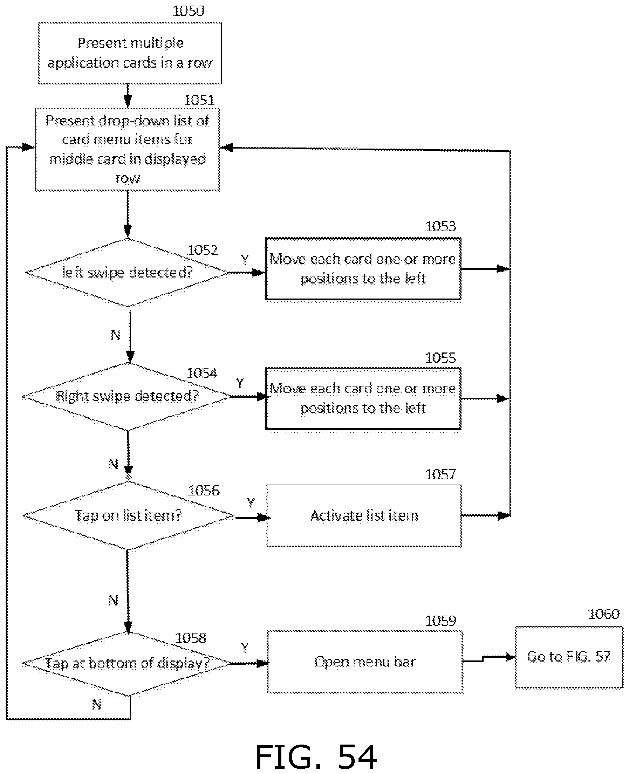

**FIG. 54** shows the behavior once a contextual list is opened in the GUI. The user can still navigate through the row of contextual application cards by swiping left and right, as per steps **1052** - **1055.** At step **1051,** during such navigation, the list of contextual options changes according to which application card is at the center of the display. At steps **1056** and **1057,** a tap on a list item activates that item.

Returning back to **FIG. 50****,** at steps **1031** - **1033,** the GUI provides hierarchical navigation using nested levels of menus and lists in response to a tap at the bottom of the display. When this occurs, both contextual navigation through application cards, and hierarchical navigation using nested levels of menus and lists, are provided at the same time. Thus, the user accesses and activates any of the applications through the application cards, and also activates those same applications though a set of hierarchical menus.

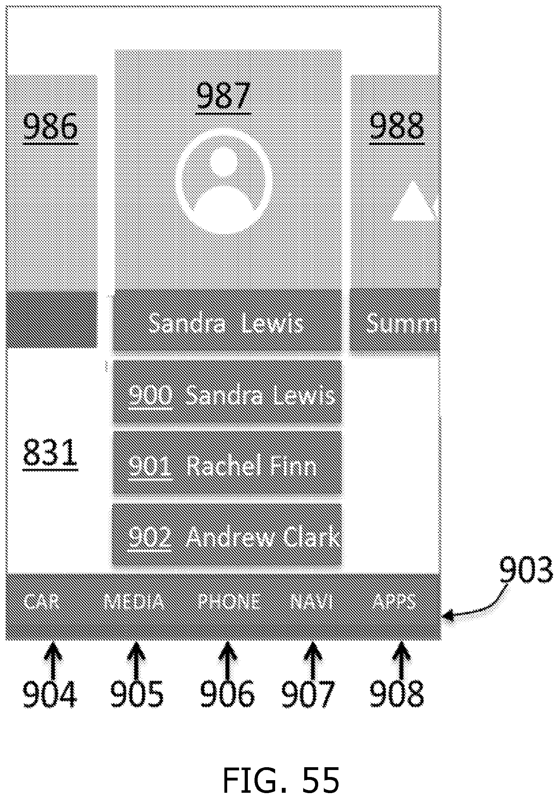

**FIG. 55** shows primary menu bar **903,** including category items **904 - 908,** opened in response to a tap at the bottom of display **831.** A tap on any category item **904 - 908** opens a secondary menu bar within display **831,** presenting subcategories within the selected category, and dividing the display into an upper portion and a lower portion.

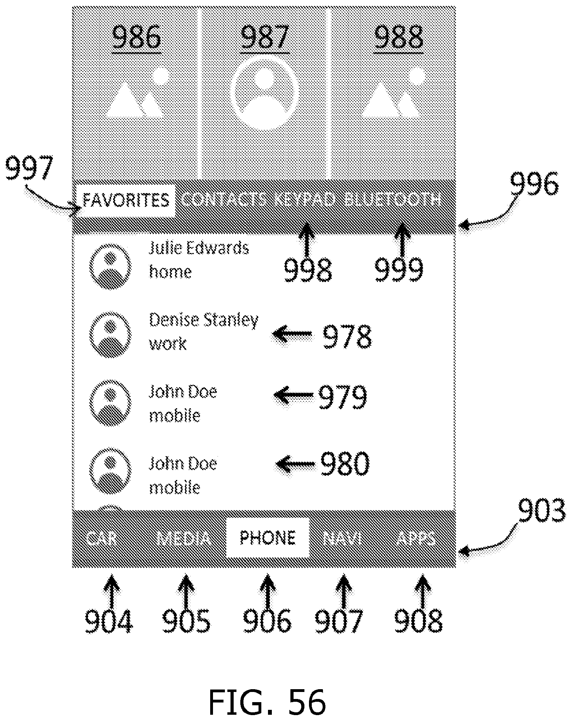

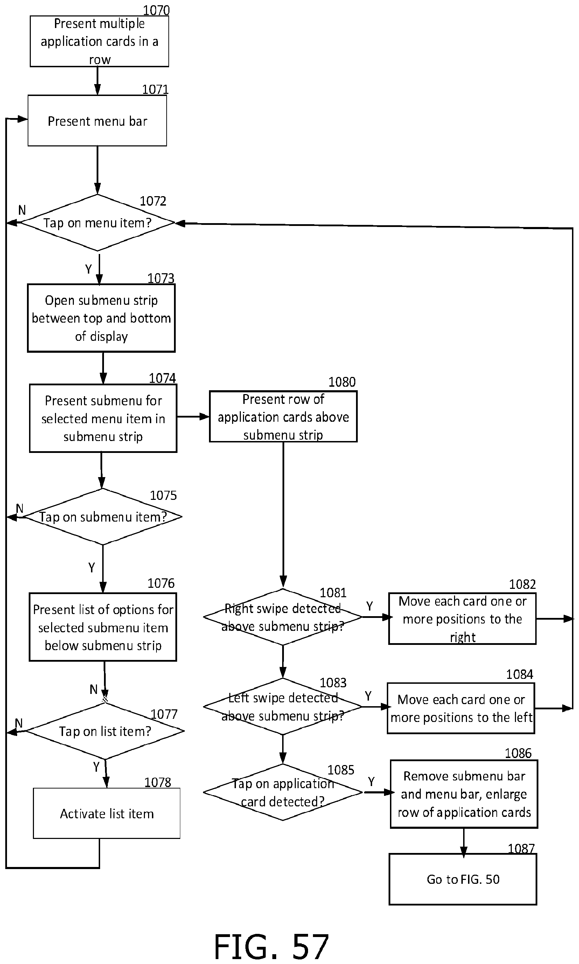

**FIG. 56** shows primary menu bar **903,** and secondary menu bar **996,** including secondary categories **997 - 999,** related to selected primary category **906.** Contextual application cards **986 - 988** are reduced in size above secondary menu bar **996,** and can still be navigated and selected as before. This is indicated at steps **1080** - **1087** in **FIG. 57****.** A tap on any secondary category in secondary menu bar **996,** opens a list of relevant options, inter alia **978** - **980,** below secondary menu bar **996,** as shown in **FIG. 56** and as indicated at steps **1075** and **1076** in **FIG. 57****.** A tap on any list item activates that item, as described by steps **1077** and **1078** in **FIG. 57****.**

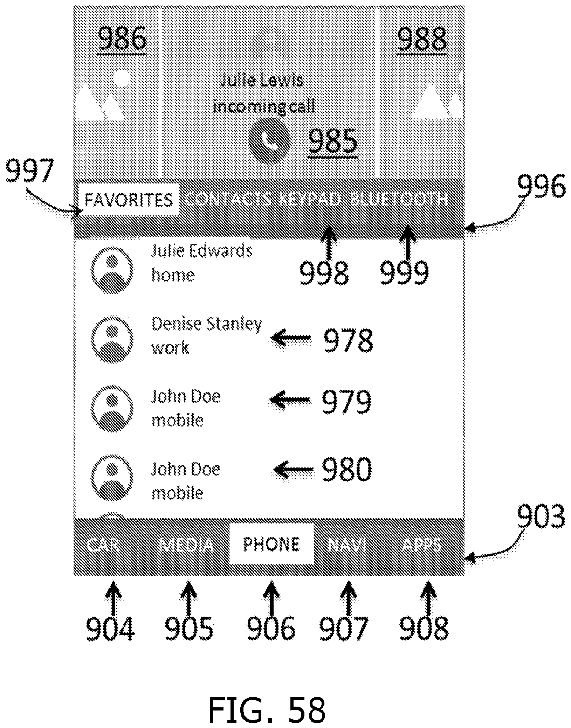

**FIG. 58** shows an incoming notification when both the contextual navigation through application cards, and hierarchical navigation using nested levels of menus and lists, are provided at the same time. Notification card **985** is inserted within the application cards above secondary menu bar **996.** To dismiss the notification, e.g., to reject the incoming call, the user swipes upward above secondary menu bar **996.** To accept the notification, e.g., to accept the incoming call, the user taps on notification **985.**

In the foregoing specification, the invention has been described with reference to specific exemplary embodiments thereof. It will, however, be evident that various modifications and changes may be made to the specific exemplary embodiments without departing from the invention. Accordingly, the specification and drawings are to be regarded in an illustrative rather than a restrictive sense.

## Claims

1. A proximity sensor for identifying a proximal object, comprising:
a housing (511);
a strip comprising a plurality of light emitters (E) and light detectors (D), wherein each of said emitters is situated between different detectors, wherein
the plurality of light emitters (E, 101 - 110) are mounted in said housing for projecting light (401, 404) out of said housing, and
the plurality of light detectors (D, 201 - 211) are mounted in said housing, and are operable when activated to detect amounts of light (402, 403, 405, 406) arriving at the detectors;
a plurality of lenses (301 - 304) mounted in said housing, each lens (L), being positioned in relation to two respective ones of said detectors (D1, D2), such that light entering the lens (*L*) is maximally detected at a first detector (*D1*) of the two respective ones of said detectors (D1, D2) when the light enters the lens (*L*) at an acute angle of incidence (θ1), and light entering the lens (*L*) is maximally detected at a second detector (*D2*) of the two respective ones of said detectors (D1, D2) when the light enters the lens (*L*) at an obtuse angle of incidence (θ2); and
a processor (701) connected to said emitters and to said detectors, operable to synchronously co-activate emitter-detector pairs, wherein the emitters and detectors are arranged such that for each synchronously activated emitter-detector pair *(E, D),* when an object is located at a target position *p(E, D)* (910-914, 939-942, 944, 945) corresponding to the pair *(E, D),* then the light emitted by the emitter (*E*) is scattered by the object and is maximally detected by the detector (*D*), and configured to calculate a partial contour (989) of an object (801, 802) outside said housing that reflects light, projected by the co-activated emitters back towards said lenses, by determining a reflection value *R(E, D)* for each emitter-detector pair *(E, D),* based on an amount of reflected light detected by the detector (*D*) when the pair *(E, D)* is synchronously co-activated, and associating the reflection value *R(E, D)* with the target position *p(E, D)* in a common plane corresponding to the pair *(E, D),*
generating a two-dimensional pixel image (990) of reflection values (*Rp*) at pixel positions (*p*), corresponding to the derived reflection values (*R(E, D)*) and the target positions (*p(E, D)*),
identifying the two pixel positions *p₁* and *p₂* (939, 941) that are outermost, relative to the direction of the housing, and for which their reflection values (*Rₚ*) are above a designated threshold;
further identifying a maximum reflection value (*R_max_{p*}*) at a corresponding pixel position *p** *(940);* and
summing the distances from *p₁* to *p**, and from *p₂* to *p*.*

2. The proximity sensor of claim **1,** wherein the proximity sensor is adapted to be situated adjacent to an edge of an exposed touch surface, wherein the proximity sensor is operative to project light over and across the touch surface, and to detect objects interacting with the touch surface based on amounts of light detected by the activated detectors.

3. The proximity sensor of claim **1,** wherein each detector (*D*) is positioned such that the detector (D) is the same as the first detector *(D1)* for a first lens *(L1),* and also the detector (*D*) *is the same as the second detector (D2)* for a second lens *(L2),* that neighbors the first lens (*L1*).

4. The proximity sensor of claim **1,** wherein said emitters, detectors and lenses are arranged such that for each emitter (E), when the object is located at a target position *p(E)* corresponding to the emitter (*E*), then the light emitted by the emitter (*E*) is reflected by the object back towards the lenses and is maximally detected by two detectors.

5. The proximity sensor of claim 1, wherein the calculate a partial circumference of the object further includes, prior to the summing:
identifying additional reflection values that correspond to respective target positions in neighborhoods of *p₁, p₂* and *p**, and
calculating respective weighted averages, *p_avg₁, p_avg₂ and p_avg*,* of target positions in the neighborhoods of *p₁, p₂* and *p**, with weight of each target position based on the reflection value at that target position,
wherein the summing sums the distances from *p_avg₁* to *p_avg*,* and from *p_avg₂* to *p_avg*.*

6. A proximity sensor according to any of claims **1 - 5,** wherein said housing is configured to be repeatedly attached to and detached from an exterior housing of a laptop computer (830) comprising a processor, wherein the proximity sensor, when thus attached and coupled communicatively with the laptop processor, provides the laptop processor with detection signals that enable the laptop processor to recognize a plurality of different gestures performed by an object in an airspace of a projection plane coming out of one side of said housing of the proximity sensor, the detection signals being generated by light emitted by said light emitters that is reflected by the object back to the proximity sensor and detected by said light detectors.

7. A proximity sensor according to any of claims **1 - 5,** wherein said housing is configured to be repeatedly attached to and detached from an exterior housing of a laptop computer (830) comprising a processor, wherein the proximity sensor, when coupled communicatively with the laptop processor and positioned over one side of a flat rectangular surface of the laptop housing, provides the laptop processor with detection signals that enable the laptop processor to recognize a plurality of different gestures performed by an object in an airspace in front of the surface, the detection signals being generated by light emitted by said light emitters that is reflected by the object back to the proximity sensor and detected by said light detectors.

8. The proximity sensor of claim **7,** wherein the proximity sensor, when communicatively coupled with the laptop processor and positioned over one side of the flat rectangular surface, provides the laptop processor with detection signals that enable the laptop processor to identify locations on the surface being touched by one or more objects, the detection signals being generated by light emitted by said emitters that is reflected by the one or more objects back to the proximity sensor and detected by said light detectors.

9. The proximity sensor of claim **8,** wherein the surface is the surface of a non-touch enabled display screen (831) that is also communicatively coupled with the laptop processor, and whereby the proximity sensor enables touch recognition on the display screen.

10. A method for sensing a proximal object, comprising:
providing a strip (501) comprising a plurality of emitters (*E*, 101-110) and detectors (*D, 201-211)* wherein each emitter is situated between different detectors;
synchronously co-activating emitter-detector pairs *(E, D),* wherein the emitters and detectors are arranged such that for each emitter-detector pair *(E, D),* when an object is located at a target position *p(E, D)* (910-914, 939-942, 944, 945) corresponding to the pair *(E, D),* then the light emitted by the emitter (*E*) is scattered by the object and is maximally detected by the detector (*D*);
determining a reflection value *R(E, D)* for each emitter-detector pair *(E, D),* based on an amount of reflected light detected by the detector (*D*) when the pair *(E, D)* is activated by said synchronously co-activating, and associating the reflection value *R(E, D)* with the target position *p(E, D)* in a common plane corresponding to the pair (*E, D*);
generating a two-dimensional pixel image (990) of reflection values *Rₚ* at pixel positions *p*, corresponding to the derived reflection values *R(E, D)* and the target positions *p(E, D)*; and
estimating a partial circumference of the object based on the pixel image, wherein said estimating a partial circumference of the object comprises:
identifying the two pixel positions *p₁* and *p₂* (939, 941) that are outermost, relative to the direction of the strip, and for which their reflection values *Rₚ* are above a designated threshold;
further identifying a maximum reflection value (*R_maxₚ**) at a corresponding pixel position *p** *(940)*; and
summing the distances from *p₁* to *p**, and from *p₂* to *p**.

11. The method of claim **10,** wherein each of one or more target positions p corresponds to a plurality of emitter-detector pairs *(E, D)* having a respective plurality of reflection values *R(E, D),* and wherein said determining comprises assigning to *Rₚ* a maximum of those reflection values.

12. The method of claim **10,** wherein each of one or more target positions p in the common plane corresponds to a plurality of emitter-detector pairs *(E, D)* having a respective plurality of reflection values *R(E*, *D),* and wherein said determining comprises assigning to *Rₚ* an average of those reflection values.

13. The method of claim **10,** wherein said estimating a partial circumference of the object further comprises, prior to said summing:
identifying additional reflection values that correspond to respective target positions in neighborhoods of *p₁, p₂* and *p**; and
calculating respective weighted averages, *p_avg₁, p_avg₂ and p_avg*,* of target positions in the neighborhoods of *p₁, p₂* and *p**, with weight of each target position based on the reflection value at that target position,
wherein said summing sums the distances from *p_avg₁* to *p_avg*,* and from *p_avg₂* to *p_avg*.*

14. The method of claim **10,** further comprising, after said generating a two-dimensional pixel image and prior to said estimating a partial circumference, for each detector (*D*):
analyzing the reflection values, *Rₚ*, along a line of pixels in the direction that that the detector (*D*) maximally detects reflected light;
identifying a maximum reflection value, *R_max* at a position *p** along that line, and
setting *rₚ = 0* at pixel positions *p* further away from the strip than *p** along the lines of pixels.

## Patentansprüche

1. Näherungssensor zum Identifizieren eines nahen Objekts, umfassend:
ein Gehäuse (511);
einen Streifen, umfassend eine Vielzahl von Lichtemittern (E) und Lichtdetektoren (D), wobei sich jeder der Emitter zwischen verschiedenen Detektoren befindet, wobei
die Vielzahl von Lichtemittern (E, 101 - 110) in dem Gehäuse montiert sind, um Licht (401, 404) aus dem Gehäuse zu projizieren, und
die Vielzahl von Lichtdetektoren (D, 201 - 211) in dem Gehäuse montiert sind und, wenn sie aktiviert sind, funktionsfähig sind, um Lichtmengen (402, 403, 405, 406) zu erfassen, die an den Detektoren ankommen;
eine Vielzahl von Linsen (301 - 304), die in dem Gehäuse montiert sind, wobei jede Linse (L) in Bezug auf zwei jeweilige der Detektoren (D1, D2) positioniert ist, sodass Licht, das in die Linse *(L)* eintritt, maximal an einem ersten Detektor *(D1)* der zwei jeweiligen der Detektoren (D1, D2) erfasst wird, wenn das Licht in die Linse *(L)* unter einem spitzen Einfallswinkel (θ1) eintritt,
und Licht, das in die Linse *(L)* eintritt, maximal an einem zweiten Detektor *(D2)* der zwei jeweiligen der Detektoren (D1, D2) erfasst wird, wenn das Licht unter einem stumpfen Einfallswinkel (θ2) in die Linse *(L)* eintritt und
einen Prozessor (701), der mit den Emittern und den Detektoren verbunden ist und funktionsfähig ist, um Emitter-Detektor-Paare synchron gemeinsam zu aktivieren, wobei die Emitter und Detektoren angeordnet sind, sodass wenn sich für jedes synchron aktivierte Emitter-Detektor-Paar *(E, D)* ein Objekt an einer Zielposition *p(E, D)* (910-914, 939-942, 944, 945) befindet, das dem Paar *(E, D)* entspricht, dann das von dem Emitter *(E)* emittierte Licht von dem Objekt gestreut und von dem Detektor (*D*) maximal detektiert wird, und der konfiguriert ist, um eine Teilkontur (989) eines Objekts (801, 802) außerhalb des Gehäuses zu berechnen, das Licht reflektiert, das von den gemeinsam aktivierten Emittern zurück zu den Linsen projiziert wird, durch Bestimmen eines Reflexionswerts *R(E, D)* für jedes Emitter-Detektor-Paar *(E, D),* basierend auf einer Menge an reflektiertem Licht, das von dem Detektor (*D*) erfasst wird, wenn das Paar *(E, D)* synchron gemeinsam aktiviert wird, und Assoziieren des Reflexionswerts *R(E, D)* mit der Zielposition *p(E, D)* in einer gemeinsamen Ebene entsprechend dem Paar *(E, D),* Erzeugen eines zweidimensionalen Pixelbilds (990) von Reflexionswerten *(Rp)* an Pixelpositionen *(p),* entsprechend den abgeleiteten Reflexionswerten *(R(E, D))* und den Zielpositionen (p(E, D)),
identifizieren der zwei Pixelpositionen *p₁* und *p₂* (939, 941), die in Bezug auf die Richtung des Gehäuses am weitesten außen sind und deren Reflexionswerte *(Rₚ)* über einem festgelegten Schwellenwert sind;
ferner Identifizieren eines maximalen Reflexionswerts *(R_max_{p*})* an einer entsprechenden Pixelposition p**(940)*; und
Summieren der Abstände von *p₁* zu p*, und von *p₂* zu p*.

2. Näherungssensor nach Anspruch **1,** wobei der Näherungssensor angepasst ist, um sich anliegend an einem Rand einer freiliegenden Berührungsoberfläche zu befinden, wobei der Näherungssensor funktionsfähig ist, um Licht über und quer zu der Berührungsoberfläche zu projizieren und basierend auf den Lichtmengen, die von den aktivierten Detektoren erfasst werden, Objekte zu erfassen, die mit der Berührungsoberfläche interagieren.

3. Näherungssensor nach Anspruch 1, wobei jeder Detektor (*D*) positioniert ist, sodass der Detektor (*D*) der gleiche ist wie der erste Detektor *(D1)* für eine erste Linse *(L1)*, und auch der Detektor *(D) der gleiche ist wie der zweite Detektor (D2)* für eine zweite Linse *(L2),* die der ersten Linse *(L1)* benachbart ist.

4. Näherungssensor nach Anspruch **1,** wobei die Emitter, Detektoren und Linsen angeordnet sind, sodass für jeden Emitter (E), wenn sich das Objekt an einer dem Emitter *(E)* entsprechenden Zielposition *p(E)* befindet, das von dem Emitter *(E)* emittierte Licht von dem Objekt zurück zu den Linsen reflektiert und maximal von zwei Detektoren erfasst wird.

5. Näherungssensor nach Anspruch 1, wobei das Berechnen eines Teilumfangs des Objekts vor dem Summieren ferner Folgendes beinhaltet: Identifizieren zusätzlicher Reflexionswerte, die jeweiligen Zielpositionen in Nachbarschaften von *p₁, p₂* und p* entsprechen, und
Berechnen jeweiliger gewichteter Mittelwerte, *p_avg₁, p_avg₂ und p_avg*,* von Zielpositionen in den Nachbarschaften von *p₁, p₂* und p*, wobei eine Gewichtung jeder Zielposition auf dem Reflexionswert an dieser Zielposition basiert, wobei das Summieren die Abstände von *p_avg₁* bis *p_avg** und von *p_avg₂* bis *p_avg** summiert.

6. Näherungssensor nach einem der Ansprüche **1-5,** wobei das Gehäuse konfiguriert ist, um wiederholt an einem äußeren Gehäuse eines Laptop-Computers (830), umfassend einen Prozessor, angebracht und von diesem abgenommen zu werden, wobei der Näherungssensor, wenn er auf diese Weise angebracht und kommunikativ mit dem Laptop-Prozessor gekoppelt ist, dem Laptop-Prozessor Erfassungssignale bereitstellt, die es dem Laptop-Prozessor ermöglichen, eine Vielzahl verschiedener Gesten zu erkennen, die von einem Objekt in einem Luftraum einer Projektionsebene ausgeführt werden, die aus einer Seite des Gehäuses des Näherungssensors herauskommt, wobei die Erfassungssignale durch Licht erzeugt werden, das von den Lichtemittern emittiert wird, das von dem Objekt zurück zu dem Näherungssensor reflektiert und von den Lichtdetektoren erfasst wird.

7. Näherungssensor nach einem der Ansprüche **1-5,** wobei das Gehäuse konfiguriert ist, um wiederholt an einem äußeren Gehäuse eines Laptop-Computers (830), umfassend einen Prozessor, angebracht und von diesem abgenommen zu werden, wobei der Näherungssensor, wenn er auf diese Weise angebracht und kommunikativ mit dem Laptop-Prozessor gekoppelt und über einer Seite einer flachen rechteckigen Oberfläche des Laptop-Gehäuses positioniert ist, dem Laptop-Prozessor Erfassungssignale bereitstellt, die es dem Laptop-Prozessor ermöglichen, eine Vielzahl verschiedener Gesten zu erkennen, die von einem Objekt in einem Luftraum vor der Oberfläche ausgeführt werden, wobei die Erfassungssignale durch Licht erzeugt werden, das von den Lichtemittern emittiert wird, das von dem Objekt zurück zu dem Näherungssensor reflektiert und von den Lichtdetektoren erfasst wird.

8. Näherungssensor nach Anspruch **7,** wobei der Näherungssensor, wenn er kommunikativ mit dem Laptop-Prozessor gekoppelt und über einer Seite der flachen rechteckigen Oberfläche positioniert ist, dem Laptop-Prozessor Erfassungssignale bereitstellt, die es dem Laptop-Prozessor ermöglichen, Stellen auf der Oberfläche zu identifizieren, die von einem oder Vielzahl von Objekten berührt werden, wobei die Erfassungssignale durch Licht erzeugt werden, das von den Sendern emittiert und von dem einen oder der Vielzahl von Objekten zurück zum Näherungssensor reflektiert und von den Lichtdetektoren erfasst wird.

9. Näherungssensor nach Anspruch **8,** wobei die Oberfläche die Oberfläche eines nicht berührungsfähigen Anzeigebildschirms (831) ist, der auch kommunikativ mit dem Laptop-Prozessor gekoppelt ist, und wodurch der Näherungssensor eine Berührungserkennung auf dem Anzeigebildschirm ermöglicht.

10. Verfahren zum Erfassen eines nahen Objekts, umfassend:
Bereitstellen eines Streifens (501), umfassend eine Vielzahl von Emittern *(E*, *101-110)* und Detektoren *(D, 201-211),* wobei jeder Emitter zwischen verschiedenen Detektoren angeordnet ist;
synchrones gemeinsames Aktivieren von Emitter-Detektor-Paaren *(E, D),* wobei die Emitter und Detektoren angeordnet sind, sodass wenn sich für jedes Emitter-Detektor-Paar *(E, D)* ein Objekt an einer Zielposition *p(E, D)* (910-914, 939-942, 944, 945) befindet, die dem Paar *(E, D)* entspricht, dann das von dem Emitter *(E)* emittierte Licht von dem Objekt gestreut und maximal von dem Detektor (*D*) erfasst wird;
Bestimmen eines Reflexionswerts *R(E, D)* für jedes Emitter-Detektor-Paar *(E, D),* basierend auf einer Menge an reflektiertem Licht, das von dem Detektor (*D*) erfasst wird, wenn das Paar *(E, D)* synchron gemeinsam aktiviert wird, und Assoziieren des Reflexionswerts *R(E, D)* mit der Zielposition *p(E, D)* in einer gemeinsamen Ebene entsprechend dem Paar *(E, D),*
Erzeugen eines zweidimensionalen Pixelbilds (990) von Reflexionswerten *Rₚ* an Pixelpositionen p entsprechend den abgeleiteten Reflexionswerten *R(E, D)* und den Zielpositionen *p(E, D),*
Schätzen eines Teilumfangs des Objekts basierend auf dem Pixelbild, wobei das Schätzen eines Teilumfangs des Objekts Folgendes umfasst:
identifizieren der zwei Pixelpositionen *p₁* und *p₂* (939, 941), die in Bezug auf die Richtung des Streifens am weitesten außen sind und deren Reflexionswerte *Rₚ* über einem festgelegten Schwellenwert sind;
ferner Identifizieren eines maximalen Reflexionswerts *(R_max_{p*})* an einer entsprechenden Pixelposition p**(940)* ; und
Summieren der Abstände von *p₁* zu p*, und von *p₂* zu p*.

11. Verfahren nach Anspruch **10,** wobei jede von einer oder mehreren Zielpositionen p einer Vielzahl von Emitter-Detektor-Paaren *(E, D)* mit einer entsprechenden Vielzahl von Reflexionswerten *R(E, D)* entspricht, und wobei das Bestimmen ein Zuordnen eines Maximums dieser Reflexionswerte zu *Rₚ* umfasst.

12. Verfahren nach Anspruch **10,** wobei jede von einer oder mehreren Zielpositionen p in der gemeinsamen Ebene einer Vielzahl von Emitter-Detektor-Paaren *(E, D)* mit einer entsprechenden Vielzahl von Reflexionswerten *R(E, D)* entspricht, und wobei das Bestimmen ein Zuordnen eines Durchschnitts dieser Reflexionswerte zu *Rₚ* umfasst.

13. Verfahren nach Anspruch **10,** wobei das Schätzen eines Teilumfangs des Objekts vor dem Summieren ferner Folgendes umfasst:
Identifizieren zusätzlicher Reflexionswerte, die jeweiligen Zielpositionen in Nachbarschaften von *p₁, p₂* und p* entsprechen; und
Berechnen jeweiliger gewichteter Mittelwerte, *p_avg₁, p_avg₂ und p_avg*,* von Zielpositionen in den Nachbarschaften von *p₁, p₂* und *p**, wobei eine Gewichtung jeder Zielposition auf dem Reflexionswert an dieser Zielposition basiert, wobei das Summieren die Abstände von *p_avg₁* bis *p_avg** und von *p_avg₂* bis *p_avg** summiert.

14. Verfahren nach Anspruch **10,** ferner umfassend, nach Erzeugen eines zweidimensionalen Pixelbildes und vor Schätzen eines Teilumfangs für jeden Detektor *(D)*:
Analysieren der Reflexionswerte, *Rₚ*, entlang einer Zeile von Pixeln in der Richtung, in der der Detektor (*D*) das reflektierte Licht maximal erfasst;
Identifizieren eines maximalen Reflexionswerts, *R_max,* an einer Position *p** entlang dieser Zeile, und
Setzen von *Rₚ = 0* an Pixelpositionen p, die weiter vom Streifen entfernt sind als *p** entlang der Pixelzeilen.

## Revendications

1. Capteur de proximité pour identifier un objet proximal, comprenant :
un boîtier (511) ;
une bande comprenant une pluralité d'émetteurs de lumière (E) et de détecteurs de lumière (D), dans lequel chacun desdits émetteurs est situé entre différents détecteurs, dans lequel
la pluralité d'émetteurs de lumière (E, 101 - 110) sont montés dans ledit boîtier pour projeter de la lumière (401, 404) hors dudit boîtier, et
la pluralité de détecteurs de lumière (D, 201 - 211) sont montés dans ledit boîtier, et sont utilisables lorsqu'ils sont activés pour détecter des quantités de lumière (402, 403, 405, 406) arrivant au niveau des détecteurs ;
une pluralité de lentilles (301 - 304) montées dans ledit boîtier, chaque lentille (L) étant positionnée par rapport à deux détecteurs respectifs desdits détecteurs (D1, D2), de sorte que la lumière pénétrant la lentille (L) est détectée de manière maximale au niveau d'un premier détecteur *(D1)* des deux détecteurs respectifs desdits détecteurs (Dl, D2) lorsque la lumière pénètre la lentille *(L)* à un angle d'incidence aigu (θ1)
et la lumière pénétrant la lentille *(L)* est détectée de manière maximale au niveau d'un second détecteur *(D2)* des deux détecteurs respectifs desdits détecteurs (D1, D2) lorsque la lumière pénètre la lentille *(L)* à un angle d'incidence obtus (θ2) et
un processeur (701) connecté auxdits émetteurs et auxdits détecteurs, utilisable pour la coactivation de manière synchrone de paires d'émetteur-détecteur, dans lequel les émetteurs et les détecteurs sont agencés de sorte que pour chaque paire d'émetteur-détecteur activée de manière synchrone *(E, D),* lorsqu'un objet est situé à une position cible *p(E, D)* (910-914, 939-942, 944, 945) correspondant à la paire *(E, D),* alors la lumière émise par l'émetteur *(E)* est dispersée par l'objet et est détectée de manière maximale par le détecteur *(D)*, et conçu pour calculer un contour partiel (989) d'un objet (801, 802) en dehors dudit boîtier qui renvoie la lumière, projetée par les émetteurs coactivés vers lesdites lentilles, en déterminant une valeur de réflexion *R(E, D)* pour chaque paire d'émetteur-détecteur *(E, D),* sur la base d'une quantité de lumière réfléchie détectée par le détecteur (*D*) lorsque la paire *(E, D)* est coactivée de manière synchrone, et en associant la valeur de réflexion *R(E, D)* à la position cible *p(E, D)* dans un plan commun correspondant à la paire *(E, D),* générant une image de pixels à deux dimensions (990) de valeurs de réflexion *(Rp)* à des positions de pixels (p), correspondant aux valeurs de réflexion calculées *(R(E, D))* et aux positions cibles *(p (E, D)),*
identifiant les deux positions de pixel *p₁* et *p₂* (939, 941) qui sont le plus extérieures, par rapport à la direction du boîtier, et pour lesquelles leurs valeurs de réflexion *(Rₚ)* sont au-dessus d'un seuil désigné ;
identifiant en outre une valeur de réflexion maximale *(R_max_{p*})* à une position de pixel correspondante p**(940) ;* et
additionnant les distances de *p₁* à p*, et de *p₂* à p*.

2. Capteur de proximité selon la revendication **1,** dans lequel le capteur de proximité est adapté pour être situé adjacent à un bord d'une surface tactile exposée, dans lequel le capteur de proximité est utilisable pour projeter de la lumière au-dessus et sur la surface tactile, et pour détecter des objets interagissant avec la surface tactile sur la base de quantités de lumière détectées par les détecteurs activés.

3. Capteur de proximité selon la revendication **1,** dans lequel chaque détecteur *(D)* est positionné de sorte que le détecteur (D) est identique au première détecteur *(D1)* pour une première lentille *(L1)*, et le détecteur *(D) est identique au second détecteur (D2)* pour une seconde lentille *(L2),* voisine de la première lentille *(L1).*

4. Capteur de proximité selon la revendication **1,** dans lequel lesdits émetteurs, détecteurs et lentilles sont agencés de sorte que pour chaque émetteur (E), lorsque l'objet est situé à une position cible *p(E)* correspondant à l'émetteur *(E)*, alors la lumière émise par l'émetteur *(E)* est renvoyée par l'objet vers les lentilles et est détectée de manière maximale par deux détecteurs.

5. Capteur de proximité selon la revendication 1, dans lequel le calcul d'une circonférence partielle de l'objet comprend en outre, avant l'addition : l'identification de valeurs de réflexion supplémentaires qui correspondent à des positions cibles respectives dans le voisinage de *p₁, p₂* et p*, et
le calcul de moyennes pondérées respectives, *p_avg₁, p_avg₂ et p_avg*,* de positions cibles dans le voisinage de *p₁, p₂* et p*, avec la pondération de chaque position cible sur la base de la valeur de réflexion à cette position cible, dans lequel l'addition additionne les distances de *p_avg₁* à *p_avg*,* et de *p_avg₂* à *p_avg*.*

6. Capteur de proximité selon l'une quelconque des revendications **1-5,** dans lequel ledit boîtier est conçu pour être, de manière répétée, fixé à et détaché d'un boîtier extérieur d'un ordinateur portable (830) comprenant un processeur, dans lequel le capteur de proximité, lorsqu'il est ainsi fixé et couplé de manière communicative avec le processeur d'ordinateur portable, fournit au processeur d'ordinateur portable des signaux de détection qui permettent au processeur d'ordinateur portable de reconnaître une pluralité de gestes différents réalisés par un objet dans l'espace d'un plan de projection sortant d'un côté dudit boîtier du capteur de proximité, les signaux de détection étant générés par la lumière émise par lesdits émetteurs de lumière qui est renvoyée par l'objet au capteur de proximité et détectée par lesdits détecteurs de lumière.

7. Capteur de proximité selon l'une quelconque des revendications **1-5,** dans lequel ledit boîtier est conçu pour être, de manière répétée, fixé à et détaché d'un boîtier extérieur d'un ordinateur portable (830) comprenant un processeur, dans lequel le capteur de proximité, lorsqu'il est couplé de manière communicative avec le processeur d'ordinateur portable et positionné au-dessus d'un côté d'une surface rectangulaire plane du boîtier d'ordinateur portable, fournit au processeur d'ordinateur portable des signaux de détection qui permettent au processeur d'ordinateur portable de reconnaître une pluralité de gestes différents réalisés par un objet dans l'espace devant la surface, les signaux de détection étant générés par la lumière émise par lesdits émetteurs de lumière qui est renvoyée par l'objet au capteur de proximité et détectée par lesdits détecteurs de lumière.

8. Capteur de proximité selon la revendication **7,** dans lequel le capteur de proximité, lorsqu'il est couplé de manière communicative avec le processeur d'ordinateur portable et positionné au-dessus d'un côté de la surface rectangulaire plane, fournit au processeur d'ordinateur portable des signaux de détection qui permettent au processeur d'ordinateur portable d'identifier des emplacements sur la surface étant touchée par un ou plusieurs objets, les signaux de détection étant générés par la lumière émise par lesdits émetteurs qui est renvoyée par les un ou plusieurs objets vers le capteur de proximité et détectée par lesdits détecteurs de lumière.

9. Capteur de proximité selon la revendication **8,** dans lequel la surface est la surface d'un écran d'affichage non tactile (831) qui est également couplé de manière communicative au processeur d'ordinateur portable, et moyennant quoi le capteur de proximité permet la reconnaissance tactile sur l'écran d'affichage.

10. Procédé de détection d'un objet proximal, comprenant :
la fourniture d'une bande (501) comprenant une pluralité d'émetteurs *(E, 101-110)* et de détecteurs *(D, 201-211)* dans lequel chaque émetteur est situé entre différents détecteurs ;
la coactivation synchrone de paires d'émetteur-détecteur *(E, D),* dans lequel les émetteurs et détecteurs sont agencés de sorte que pour chacune paire d'émetteur-détecteur *(E, D),* lorsqu'un objet est situé à une position cible *p(E, D)* (910-914, 939-942, 944, 945) correspondant à la paire *(E, D),* alors la lumière émise par l'émetteur *(E)* est dispersée par l'objet et est détectée de manière maximale par le détecteur (*D*) ;
la détermination d'une valeur de réflexion *R(E, D)* pour chaque paire émetteur-détecteur *(E, D),* sur la base d'une quantité de lumière réfléchie détectée par le détecteur *(D)* lorsque la paire *(E, D)* est activée par ladite coactivation synchrone, et l'association de la valeur de réflexion *R(E, D)* à la position cible *p(E, D)* dans un plan commun correspondant à la paire *(E, D)* ;
la génération d'une image de pixels à deux dimensions (990) de valeurs de réflexion *Rₚ* à des positions de pixel *p,* correspondant aux valeurs de réflexion calculées *R(E, D)* et aux positions cibles *p(E, D)* ; et
l'estimation d'une circonférence partielle de l'objet sur la base de l'image de pixels, dans lequel ladite estimation d'une circonférence partielle de l'objet comprend :
l'identification des deux positions de pixel *p₁* et *p₂* (939, 941) qui sont le plus extérieures, par rapport à la direction du boîtier, et pour lesquelles leurs valeurs de réflexion *(Rₚ)* sont au-dessus d'un seuil désigné ;
l'identification supplémentaire d'une valeur de réflexion maximale *(R_max_{p*})* à une position de pixel correspondante p**(940)*; et
l'addition des distances de *p₁* à p*, et de *p₂* à p*.

11. Procédé selon la revendication **10,** dans lequel chacune des une ou plusieurs positions cibles p correspond à une pluralité de paires d'émetteur-détecteur *(E, D)* ayant une pluralité respective de valeurs de réflexion *R(E, D),* et dans lequel ladite détermination comprend l'attribution à *Rₚ* d'un maximum de ces valeurs de réflexion.

12. Procédé selon la revendication **10,** dans lequel chacune d'une ou plusieurs positions cibles p dans le plan commun correspond à une pluralité de paires d'émetteur-détecteur *(E, D)* ayant une pluralité respective de valeurs de réflexion *R(E, D),* et dans lequel ladite détermination comprend l'attribution à *Rₚ* d'une moyenne de ces valeurs de réflexion.

13. Procédé selon la revendication **10,** dans lequel ladite estimation d'une circonférence partielle de l'objet comprend en outre, avant ladite addition :
l'identification de valeurs de réflexion supplémentaires qui correspondent à des positions cibles respectives dans le voisinage de *p₁, p₂* et p* ; et
le calcul de moyennes pondérées respectives, *p_avg₁, p_avg₂ et p_avg*,* de positions cibles dans le voisinage de *p₁, p₂* et *p**, avec la pondération de chaque position cible sur la base de la valeur de réflexion à cette position cible, dans lequel ladite addition additionne les distances de *p_avg₁* à *p_avg*,* et de *p_avg₂* à *p_avg*.*

14. Procédé selon la revendication **10,** comprenant en outre, après ladite génération d'une image de pixels à deux dimensions et avant ladite estimation d'une circonférence partielle, pour chaque détecteur *(D) :*
l'analyse des valeurs de réflexion, *Rₚ*, le long d'une ligne de pixels dans la direction dans laquelle le détecteur *(D)* détecte de manière maximale la lumière réfléchie ;
l'identification d'une valeur de réflexion maximale, *R_max* à une position *p** le long de cette ligne, et
la définition de *Rₚ = 0* à des positions de pixel p encore plus éloignées de la bande que *p** le long des lignes de pixels.
